# EUROPEAN PATENT SPECIFICATION

(11) **EP 1 947 873 B1**
(45) Date of publication and mention of the grant of the patent: **30.03.2011**
(21) Application number: 06775530.6
(22) Date of filing: 29.08.2006
(51) Int. Cl.: H04W 24/02, H04W 88/08

(54) **MULTI-MODE NETWORK COMMUNICATION SYSTEM**
MULTIMODALES NETZWERK-KOMMUNIKATIONSSYSTEM
SYSTEME DE COMMUNICATION DE RESEAU MULTIMODE

(30) Priority: 01.09.2005 CN 200510093679; 01.09.2005 CN 200510093683; 01.09.2005 CN 200510093680; 01.09.2005 CN 200510093681
(43) Date of publication of application: 23.07.2008
(73) Proprietor: Huawei Technologies Co., Ltd., Longgang District, Shenzhen Guangdong 518129 (CN)
(72) Inventor: ZHENG, Ruobin, Guangdong 518129 (CN)
(74) Representative: Thun, Clemens
(86) International application number: PCT/CN2006/002213
(87) International publication number: WO 2007/025469

(56) References cited:
- EP-A1- 1 385 320
- EP-A1- 1 763 179
- WO-A1-02/30141
- WO-A2-2004/054276
- CN-A- 1 449 636
- CN-A- 1 471 296
- US-A1- 2001 006 898

## Description

### Field of the Invention

The present invention relates to the network communication technology and in particular to a multimode network communication system.

### Background of the Invention

With the development of the communication technology, networks deploying different modes are emerging, including wireless network in different modes and wired network in different modes. In order to integrate the advantages of networks in different modes and offer even better services, operators pursue to implement networking in accordance with networks in different modes, such as networking based on wireless network in different modes, wired network in different modes and integration of wireless network in different modes and wired network in different modes.

In the process of networking based on network in different modes, because the site selection for network equipment in different modes of networks is determined in accordance with the plan and optimization of network, there exists a situation that the site selection for network equipment in network in different modes is inconsistent, which brings inconvenience to networking based on network in different modes.

The problems of the existing networking based on network in different modes are further detailed as follows in conjunction with examples.

Networking based on wireless network in different modes

In a wireless communication system, for the purpose of employing wireless

access technology to cover a region, wireless network is required to be planned and optimized in accordance with geographical environment and wireless channel transmission environment of this region, so that the most reasonable location for a wireless base station may be determined.

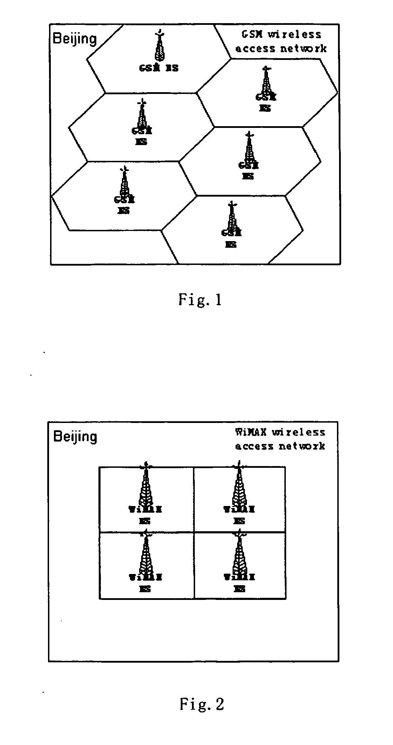

For example, the site selection for the base station in a Global System for Mobile communications, GSM, wireless cellular network is shown in Figure 1, and the site selection for the base station in a Worldwide Interoperability for Microwave Access, WiMAX, wireless cellular network is shown in Figure 2. As illustrated, the site selection for the base station in wireless network in different modes varies.

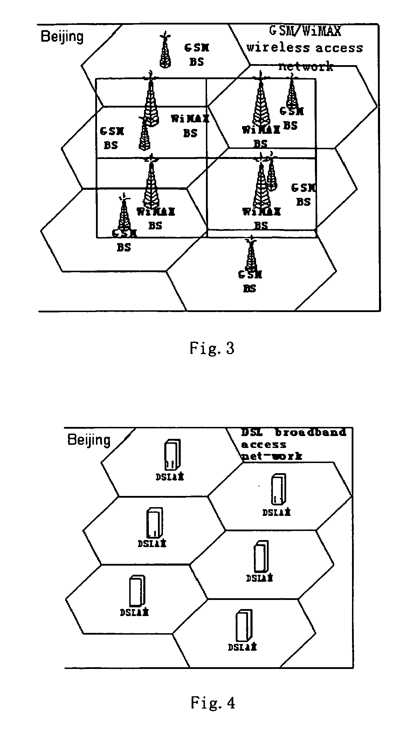

Suppose that two wireless networks are to be constructed, i.e. a GSM wireless cellular network optimized with GSM wireless cellular network optimization method and a WiMAX wireless cellular network optimized with GSM WiMAX wireless cellular network optimization method, the optimized network is as shown in Figure 3.

Suppose that Operator A constructs firstly a wireless cellular network covering a region by adopting mode A wireless access technology, for example GSM, and then desires to upgrade the original mode A wireless equipment (For example, a mode B wireless access card is inserted into the original mode A wireless base station.) into multimode wireless integrated access equipment, in the same region users adopting mode A wireless access technology are supported, users adopting mode B wireless access technology are introduced, and therefore a mode B wireless cellular network (for example WiMAX) overlaps the original mode A wireless cellular network.

However, as described above, the site selection for the original mode A wireless equipment is in conflict with that for the newly added mode B wireless base station due to the difference between the plan of cellular networks in different modes. As illustrated in Figure 3, the distance between the optimal site of the original mode A wireless equipment and the optimal site of the newly added mode B wireless base station may be up to several kilometers. It is a problem whether to perform the site selection in accordance with mode A wireless network plan and place the upgraded multimode wireless integrated access equipment at the original site, or to perform another site selection in accordance with mode B wireless network plan. If the site selection is performed in accordance with mode A wireless network plan, it is an optimal site for mode A wireless cellular network but not an optimal site for mode B wireless cellular network. If the site selection is performed in accordance with mode B wireless network plan, it is an optimal site for mode B wireless cellular network but not an optimal site for mode A wireless cellular network and furthermore operators need to take the land on lease and construct machine rooms for the mode B wireless cellular network base station and mode A wireless cellular network equipment.

The mode B wireless base station may not be obtained by upgrading the mode A wireless equipment. Therefore, a new site selection needs to be performed for mode B wireless base station which also needs to be newly constructed.

Both the mode B wireless cellular base station and the mode A wireless cellular equipment need to be supplied with Alternating Current , AC, power, and provided with backup power supplies by using battery pack, Un-interruptible Power Supply, UPS, electric generator set or the second mains power. Operators usually need to take the land on lease and construct machine rooms for the mode B wireless cellular network base station and mode A wireless cellular network equipment. Therefore, if cable resources of the mode A wireless cellular network and the mode B wireless cellular network can not be efficiently utilized by sharing, it is difficult to uniformly maintain the mode B wireless cellular network base station and the mode A wireless cellular equipment, which may result in a high maintenance cost.

Networking based on wired network in different modes

In construction of networking, for the purpose of employing wired access

technology to cover a region, wired network is required to be planned and optimized in accordance with geographical environment and wireless channel transmission environment of this region, so that an optimal site for a wireless base station may be determined.

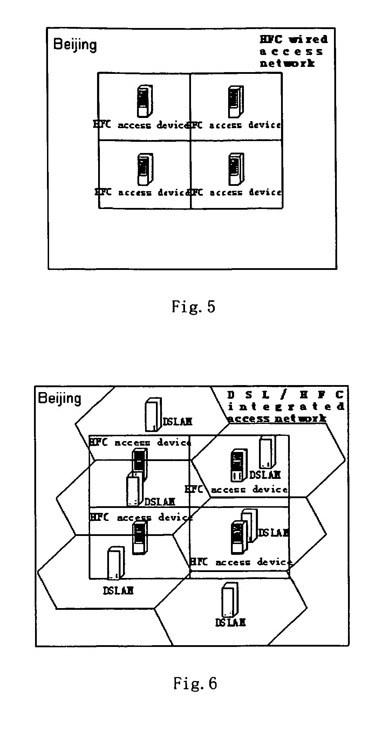

For example, in the situation that Digital Subscriber Line, DSL, broadband access network is constructed by adopting Asymmetric Digital Subscriber Line, ADSL, wired access technology, the site selection for the corresponding Digital Subscriber Line Access Multiplexer, DSLAM, equipment is as shown in Figure 4. Similarly, if operators further desire to construct wired access network by adopting wired access technology in a new mode, for example by adopting Hybrid Fiber/Coax, HFC, wired access technology, the site selection for the corresponding access equipment is as shown in Figure 5.

At present, if operators desire to construct networks by adopting two kinds of wired access technology, two wired access networks need to be constructed, i.e. a DSL broadband access network optimized with DSL broadband access network optimization method and an HFC wired access network optimized with HFC network optimization method.

Because the site selection for equipment during the networking plan based on different modes of wired access technology remains a problem, two wired access networks base on different modes of wired access technology need to be constructed. The details are as show in Figure 6.

Suppose that Operator B constructs firstly a wired access network covering a region by adopting mode A (for example DSL) wireless access technology, and then desires to upgrade the original mode A wired equipment (For example, a mode B wired access card is inserted into the original mode A wired equipment.) into multimode wired integrated access equipment, in the same region users adopting mode A wireless access technology are supported, users adopting mode B wired access technology are introduced, and therefore a mode B wired access network (for example HFC) overlaps the original mode A wired access network. However, as described in Figure 6, site selection for the original mode A wired equipment is in conflict with that for the newly added mode B wired equipment due to the difference between the plan of cellular networks in different modes. The distance between the optimal site of the original mode A wired equipment and the optimal site of the newly added mode B wired equipment may be up to several kilometers.

If the site selection for the upgraded multimode wired integrated access equipment is performed in accordance with mode A wired access network plan, it is an optimal site for mode A wired access network but not an optimal site for mode B wired access network. If the site selection is performed in accordance with mode B wired access network plan, it is an optimal site for mode B wired access network but not an optimal site for mode A wired access network.

In view of the above, in the existence of a wired access network, a new site selection needs to be performed if an access network based on a new wired access technology is to be constructed.

Both the mode A wired access equipment and the mode B wired access equipment need to be supplied with AC power, and provided with backup power supplies by using battery pack, UPS, electric generator set or the second mains power. Operators usually need to take the land on lease and construct machine rooms for the wired access equipment. Cable resources of the mode A wired access network and the mode B wired access network may not be efficiently utilized by sharing, and therefore it is difficult to uniformly maintain the mode B wired access equipment, which may result in a high maintenance cost.

Networking based on wireless network in different modes and wired network in different modes

For the purpose of covering a region by adopting wireless access technology, for example WiMAX wireless access technology, wirelesss network is required to be planned and optimized in accordance with geographical environment and wireless channel transmission environment of this region, so that an optimal site for a wireless base station may be determined. As shown in Figure 1, the site selection in Beijing is implemented through wireless access technology.

Similarly, for the purpose of covering a region by adopting wired access technology, for example ADSL wired access technology, wired network is required to be planned and optimized in accordance with geographical environment and wired channel transmission environment of this region, so that an optimal site for a wired base station may be determined. Figure 2 illustrates the site selection for the wired equipment in Beijing by adopting wired access technology.

At present, if operators desire to construct networks by adopting wired access technology and wireless access technology, two access networks need to be constructed, i.e. a wired access network, for example DSL broadband access network, optimized with wired network optimization method; and a wireless access network, for example WiMAX cellular access network, optimized with wireless access network optimization method.

Because the site selection for equipment during the networking plan based on wireless access technology and that based on wired access technology remains a conflict, two access networks respectively based on wired access technology and wireless access technology need to be constructed. The details are as show in Figure 3.

Suppose that Operator B constructs firstly a wireless access network covering a region by adopting wireless access technology, and then desires to upgrade the original wireless equipment into the wireless and wired integrated access equipment, for example adding a wired access card in the original base station, in the same region users adopting wireless access technology are supported, users adopting wired access technology are introduced.

However, as described in Figure 6, site selection for the original wireless equipment is in conflict with that for the newly added wired equipment due to the difference between the plan of wireless network and that of wired network. The distance between the optimal site of the original wireless equipment and the optimal site of the newly added wired equipment may be up to several kilometers.

If the site selection for the upgraded wireless and wired integrated access equipment is performed in accordance with wireless access network plan, it is an optimal site for wireless access network but not an optimal site for wired access network. If the site selection is performed in accordance with wired access network plan, it is an optimal site for wired access network but not an optimal site for wireless access network. Furthermore, operators need to take the land on lease and construct machine rooms the wireless equipment and wired equipment.

In view of the above, in the case of the existence of a wireless access network, a new site selection needs to be performed if an access network based on a new wired access mode is to be constructed. The wired access network can not be constructed by upgrading the original wireless access network

If a new site selection is to performed for a new wired access network, both the wireless access equipment of wireless access network and the wired equipment of wired access network need to be supplied with AC power, and provided with backup power equipment. The investment of the operators for constructing a new wired access network may be greatly increased.

If the wired access network can not be constructed by upgrading the original wireless access network, cable resources of wireless access network and the wired access network may not be efficiently utilized by sharing. Therefore it is difficult to uniformly maintain the wired access equipment and wireless access equipment, which may result in a high maintenance cost.

Similarly, in the case of the existence of a wired access network, the same problem may exist if an access network based on wireless access mode is to be constructed.

WO0/30141 A1 discloses a mobile base station system including a central unit and at least one antenna unit. The central unit includes radio parts to operate according to two different access standards, the antenna units is detached from the central unit and located geographically separated from the central unit, and in a first optical broadband fiber and a second optical broadband fiber which connect the central unit and the antenna unit.

In conclusion, for the multimode network construction, there is no solution to the problem arising from the conflict of the site selection for equipment.
Furthermore the problem concerning the management of cables in presence of multiple devices should also be considered.

### Summary of the Invention

The present invention provides a multimode network communication system so that different modes of network equipment newly added may effectively utilize the original network resources and the network maintenance and construction cost may be reduced.
An object of the present invention is to provide a multimode network communication system so as to overcome the above mentioned problems.
The objects of the invention are achieved by an arrangement which is characterized by what is stated in the independent claim. The preferred embodiments of the invention are disclosed in the dependent claims.

It can be seen from the above technical solutions that, in the multimode network communication system, the distributed equipment technology is adopted to arrange the local communication equipment in the newly added network into the communication equipment in the basic network, and to implement the service functions of the newly added network through message exchange with the remote communication equipment, which solves the problem of site selection conflict between the mode A equipment in the original network and the communication equipment in the newly added network due to the difference of multimode network plan.

Further, in the present invention, by adopting the remote power supply technique the equipment in the basic network and newly added network are supplied with power by the power supply unit in the basic network, which solves the problem that resources can not be fully utilized and reduces the maintenance cost.

For example, in the present invention, the operator A may select a site for the wired equipment in accordance with wired network plan, construct a wired access network. Then the operator A may select a site for the base station outdoor unit in accordance with demands for wireless access in the market and the wireless network plan. By upgrading the wired equipment, the base station access processing unit, convergence unit and remote power supply unit are added and interconnected with the base station outdoor unit, which constitutes complete wired and wireless integrated access equipment, helps constitute a wired and wireless access network in the same region and ensures an optimal plan for the wired and wireless networks. In the present invention, the base station remote equipment do not need AC power supply, do not need backup power supply by using battery pack, UPS, electric generator set or the second mains power. The base station remote equipment may be sealed and placed outdoor or underground and do not need machine rooms. Further, original cables, such as telephone twisted pair, of the fixed network operators may be reused for the wired and wireless base station remote equipment, which reduce the cost of network construction and maintenance.

In the present invention, the operator B may select a site for the wired equipment in accordance with mode A wired network plan, and construct a wired access network. Then the operator B may select a site for the mode B wired terminal in accordance with demands for wired access in the market and the mode B wired network plan. By upgrading the mode A wired equipment, the wired access processing unit, convergence unit and remote power supply unit are added and interconnected with the mode B wired terminal, which constitutes a complete multimode wired integrated access equipment, helps constitute a multimode wired access network in the same region and ensures an optimal plan for both the mode A wired and mode B wired networks. In the present invention, the mode B wired remote devices do not need AC power supply, do not need backup power supply by using battery pack, UPS, electric generator set or the second mains power. (Power backup is provided at the mode A wired equipment side) Therefore, the cost of construction and maintenance of the mode B wired network may be reduced.

### Brief Description of the Drawings

Figure 1 is a schematic diagram showing the base station site selection of the GSM wireless network plan.

Figure 2 is schematic diagram showing the base station site selection of the WiMAX wireless network plan.

Figure 3 is schematic diagram showing the conflict in the base station site selection of Figure 1 and Figure 2.

Figure 4 is a schematic diagram showing the base station site selection of the DSL broadband access network plan.

Figure 5 is a schematic diagram showing the base station site selection of the HFC wired access network plan.

Figure 6 is a schematic diagram showing the conflict in base station site selection of the access equipment of Figure 4 and Figure 5.

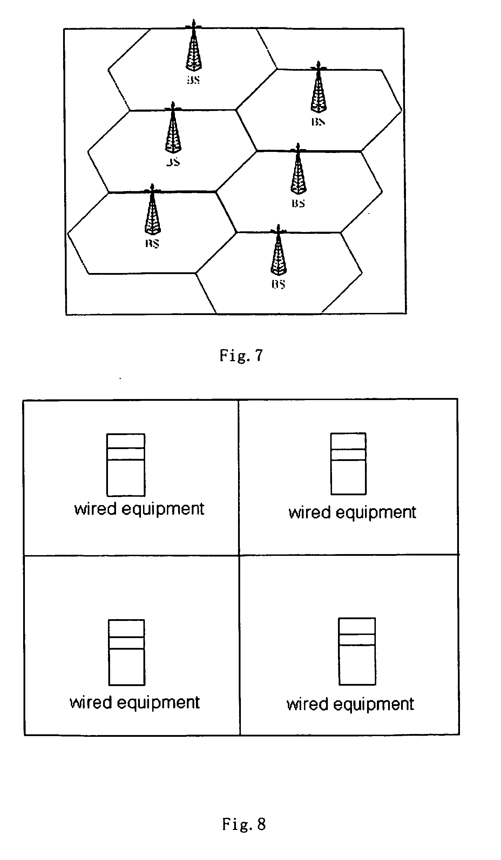

Figure 7 is a schematic diagram showing the base station site selection of the wireless network plan.

Figure 8 is a schematic diagram showing the base station site selection of the wired network plan.

Figure 9 is a schematic diagram showing the conflict in the base station site selection of Figure 7 and Figure 8.

Figure 10 is a schematic diagram showing the base station.

Figure 11 is schematic diagram 1 of the star structure showing the multimode wireless integrated access system.

Figure 12 is schematic diagram 2 of the star structure showing the multimode wireless integrated access system.

Figure 13 is schematic diagram 3 of the star structure showing the multimode wireless integrated access system.

Figure 14 is schematic diagram 4 of the star structure showing the multimode wireless integrated access system.

Figure 15 is schematic diagram 5 of the star structure showing the multimode wireless integrated access system.

Figure 16 is schematic diagram 1 of the tree structure showing the multimode wireless integrated access system.

Figure 17 is schematic diagram 2 of the tree structure showing the multimode wireless integrated access system.

Figure 18 is schematic diagram 3 of the tree structure showing the multimode wireless integrated access system.

Figure 19 is schematic diagram 4 of the tree structure showing the multimode wireless integrated access system.

Figure 20 is schematic diagram 5 of the tree structure showing the multimode wireless integrated access system.

Figure 21 is schematic diagram 1 of the ring structure showing the multimode wireless integrated access system.

Figure 22 is schematic diagram 2 of the ring structure showing the multimode wireless integrated access system.

Figure 23 is schematic diagram 3 of the ring structure showing the multimode wireless integrated access system.

Figure 24 is schematic diagram 1 of the net structure showing the multimode wireless integrated access system.

Figure 25 is schematic diagram 2 of the net structure showing the multimode wireless integrated access system.

Figure 26 is schematic diagram 1 of the star structure showing the multimode wired integrated access system.

Figure 27 is schematic diagram 2 of the star structure showing the multimode wired integrated access system.

Figure 28 is schematic diagram 3 of the star structure showing the multimode wired integrated access system.

Figure 29 is schematic diagram 4 of the star structure showing the multimode wired integrated access system.

Figure 30 is schematic diagram 5 of the star structure showing the multimode wired integrated access system.

Figure 31 is schematic diagram 1 of the tree structure showing the multimode wired integrated access system.

Figure 32 is schematic diagram 2 of the tree structure showing the multimode wired integrated access system.

Figure 33 is schematic diagram 3 of the tree structure showing the multimode wired integrated access system.

Figure 34 is schematic diagram 4 of the tree structure showing the multimode wired integrated access system.

Figure 35 is schematic diagram 5 of the tree structure showing the multimode wired integrated access system.

Figure 36 is schematic diagram 1 of the ring structure showing the multimode wired integrated access system.

Figure 37 is schematic diagram 2 of the ring structure showing the multimode wired integrated access system.

Figure 38 is schematic diagram 3 of the ring structure showing the multimode wired integrated access system.

Figure 39 is schematic diagram 1 of the net structure showing the multimode wired integrated access system.

Figure 40 is schematic diagram 2 of the net structure showing the multimode wired integrated access system.

### Detailed Description of the Present Invention

The present invention is to solve the conflict in selecting site of networking in different modes.

The multimode network communication system of the present invention includes the first equipment based on the first mode and the second equipment based on the second mode. The second equipment includes local device and remote device; the local device is arranged in the first equipment so that the second equipment of the second mode may utilize the existing first equipment of the first mode to realize some functions. The remote device is independent and remotely connected with the first equipment, so as to satisfy the requirement of optimizing the site selection, overcoming the conflict occurring in selecting site of networking in different modes.

In the present invention, because the first equipment and the second equipment may be wired or wireless equipment respectively, the present invention may satisfy the requirements brought by wireless networking of different modes, wired networking of different modes, integrated wired and wireless networking of different modes.

The present invention provides respectively multimode wireless integrated access distributed system, multimode wired integrated access distributed system, and multimode wired and wireless integrated access distributed system, etc. The multimode wired and wireless integrated access distributed system may include the integrated access distributed system of the first equipment taking the wireless equipment as the first mode and the second equipment taking the wired equipment as the second mode, and the integrated access distributed system of the first equipment taking the wired equipment as the first mode and the second equipment taking the wireless equipment as the second mode.

The following is the detailed description of the embodiments of the present invention.

The present invention provides a multimode wireless integrated distributed system. The system may solve the conflict in selecting the site of the original mode A wireless equipment and the base station of a newly added mode B caused by the planning variance in the multimode wireless network. As a result, the resources may be fully utilized to lower the constructing and maintenance fee.

In the present invention, the key point of the system is to divide the newly added mode into two parts of local device and remote device. The local device is arranged in the existing wireless equipment, i.e. configured in the same site as that of the existing wireless equipment. The remote device may select the optimal site according to the network planning in the new mode; then the remote device is arranged in the optimal site to guarantee the best communication effect of the new mode network.

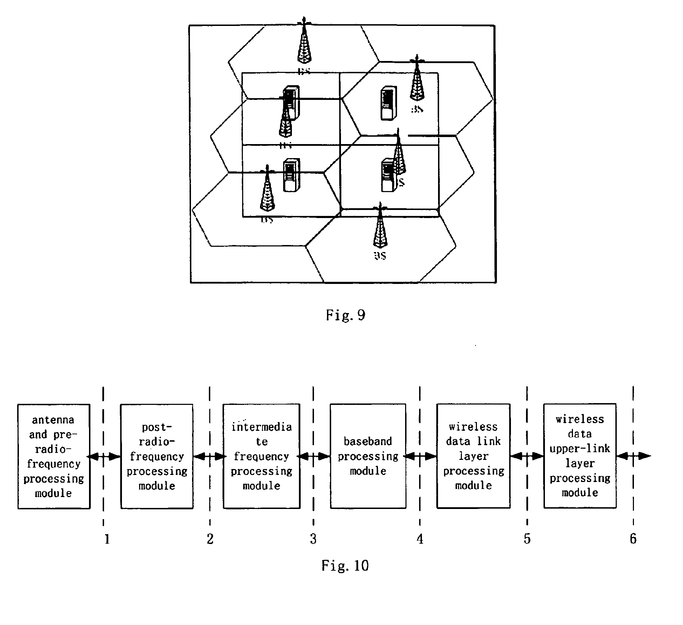

The newly added wireless equipment includes mainly base station equipment. As shown in Figure 10, the base station equipment mainly includes antenna and pre-radio-frequency processing module, post-radio-frequency processing module, intermediate frequency processing module, baseband processing module, wireless data link layer processing module and wireless data upper-link layer processing module; meanwhile, base station equipment also needs the corresponding power supply unit to supply power.

Based on the base station structure, the local device in the system of the present invention includes at least power supply unit; and the base station access processing unit may also be included. The base station access processing unit includes the wireless data upper-link layer processing module, or the wireless data upper-link layer processing module and wireless data link layer processing module, or the wireless data upper-link layer processing module, the wireless data link layer processing module and baseband processing module, or the wireless data upper-link layer processing module, the wireless data link layer processing module, baseband processing module and intermediate frequency processing module, or wireless data upper-link layer processing module, wireless data link layer processing module, baseband processing module, intermediate frequency processing module and post-radio-frequency processing module.

Corresponding to the local device, the remote device, i.e. the remote base station equipment, includes base station outdoor unit which includes at least antenna and pre-radio-frequency processing unit and the processing units except that allocated to the local device. For example, when the local device includes the power supply unit, wireless data upper-link layer processing unit, wireless data link layer processing unit and baseband processing unit, the remote device then includes intermediate frequency processing unit, post-radio-frequency processing unit and antenna, and pre-radio-frequency processing unit.

In the present invention, the power supply unit is specifically the central power supply unit. The function is to transform the mains inputs (e.g. Alternating Current, (AC), 110V/220V) or the Direct Current, (DC), inputs (e.g. -48V/-60 DC) into high voltage DC outputs, in order to supply power to the local wireless equipment and local equipment, and also to supply power to the remote base station outdoor units through cable line (e.g. twisted pair cable). The distance of the remote power supply, which can be as far as 2∼5 kilometers, is affected by factors such as, the gauge of the wired cable, the number of the cable pairs, the power consumption of the outdoor units, and the output voltage of the power supply unit.

The central power supply unit also supports the communication between the base station outdoor units. As the out band management path, the central power supply unit may also implement monitoring alarm in both normal or fault state to facilitate the management of the equipment, fault positioning, remote maintenance, etc.

Additionally, in the present invention, the remote device may include the remote power supply unit, adapted to transform the high voltage DC inputs (e.g. 270V DC) into low voltage DC to supply power locally for the equipment where the remote power supply unit is arranged, or to continually transmit the high voltage DC from the central power supply unit and supply remotely the power for the next level remote base station outdoor units through the wired cable.

The system also includes a convergence unit, adapted to converge the wireless signal received by the base station outdoor processing unit and then access the signal to the base station access processing unit, distribute the signal generated by the base station access processing unit to the base station outdoor processing units and transmit the signal via antenna to wireless access users.

The convergence unit may be arranged in remote or local device. The following are descriptions concerning different situations.

When set in the local device, the convergence unit converges the wireless signal received by the base station outdoor unit of the remote device and then accesses the signal to the base station access processing unit of the local device, and transmits the signal generated by the base station access processing unit of the local device to the base station outdoor unit of the remote device.

When set in the remote device while the base station processing unit is set in local device, the convergence unit is remotely connected with the base station access processing unit of local device through the wired cable, and also remotely connected with the base station outdoor unit of the remote device, in order to converge the wireless access signal received by multiple base station outdoor units of remote device, and then transmit the signal to the base station access processing unit of the local device; and transmit the signal generated by the base station access processing unit of local device to the base station outdoor units of the remote device.

When set in the remote device while the base station processing unit is also set in the remote device, the convergence unit is connected with the base station access processing unit of the remote device through the wired cable, and is remotely connected with the base station outdoor unit of the remote device, in order to converge the wireless access signal received by multiple base station outdoor units of remote device, and then transmit the signal to base station access unit of the remote device; and transmit the signal generated by the base station access processing unit of remote device to the base station outdoor unit of the remote device.

When there are multiple base station processing units, the base station processing units communicate with the base station outdoor units through the switch convergence unit; the base station processing units may perform mutual aid in providing backup based on the switch convergence unit. The switch convergence unit is set in the local or the remote device; the unit converges the wireless access signal received by a base station outdoor unit of remote device, and then selectively accesses the signal to one of the base station access processing units of the local device or the remote device; and transmits the signal generated by the base station access processing unit of the local device or the remote device to the base station outdoor unit of the remote device.

The switch convergence units in the system of the present invention are set in both local device and remote device; the first switch convergence unit set in the local device is remotely connected with the second switch convergence unit set in the remote device; the second switch convergence unit is also remotely connected with the base station outdoor unit; the second switch convergence unit is adapted to converge the wireless access signal received by multiple base station outdoor units of the remote device and then transmit the signal to the first switch convergence unit; the first switch convergence unit selectively accesses one the base station processing unit of the local device; and transmits the signals generated by the base station processing units of the local device to the second switch convergence unit, then the unit selectively accesses one of the base station outdoor units of the remote device.

Embodiments of the multimode wireless communication system of the present invention will be described in detail in conjunction with the drawings. In the following embodiments, mode A wireless cellular network is taken as basic network; mode B wireless cellular network is taken as newly-added network; the mode A wireless cellular network equipment set in the basic network is taken as the local communication equipment; the rest mode B wireless cellular equipment is taken as the remote communication equipment.

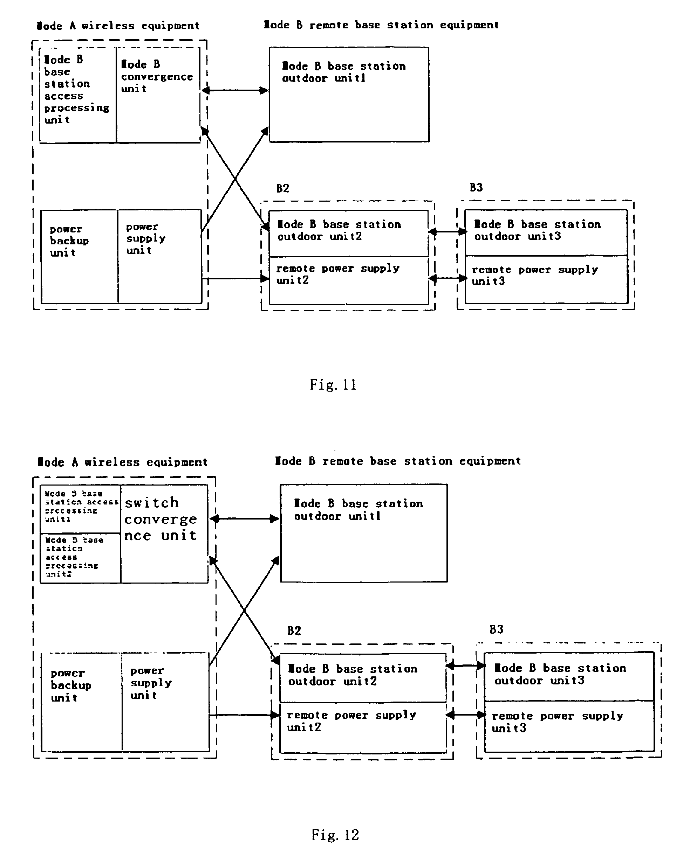

A first embodiment of the present invention is illustrated in Figure 11.

This embodiment includes local mode A wireless equipment, mode B remote base station equipment, convergence unit, mode B base station access processing unit, central power supply unit, remote power supply unit and power backup unit; the local mode A wireless equipment includes the wireless equipment of the original mode A wireless cellular network; the mode B remote base station equipment includes specifically mode B base station outdoor unit or the integrated equipment of the mode B base station outdoor unit and the remote power supply unit.

In this embodiment, the mode B base station access processing unit and convergence unit are set in the local mode A wireless cellular equipment; the local mode A wireless equipment is to optimize the site according to the mode A wireless network plan; the mode B outdoor unit is set in remote device according to the mode B wireless network optimal site selection, and is remotely connected in star structure with the local mode A wireless equipment via wired cable as fiber or twisted pair cable.

The mode B base station outdoor units may be remotely interconnected via wired cable; multi-antenna transmit diversity or multi-antenna receive diversity may be constituted among multiple mode B base station outdoor units. For example, as shown in Figure 11, mode B base station outdoor unit 2 and mode B base station outdoor unit 3 are interconnected in concatenation, constituting dual antenna transmit diversity or dual antenna receive diversity.

In figure 11, the central power supply unit is set in local mode A wireless cellular network to supply power for the mode B base station access processing unit and the mode B base station outdoor unit 2. The remote power supply unit 2 is remotely connected with the central power supply unit to supply power for the mode B base station outdoor unit 2, and is also remotely connected with the lower level remote power supply unit 3 to supply the power for the first level mode B base station outdoor unit 3.

The remote power supply unit is logically separated from the corresponding mode B base station outdoor unit, but physically separated or integrated, like mode B remote base station - B2 and B3.

In figure 11, the wired cable for connecting local mode A wireless equipment and mode B remote base station equipment and the cable is logically separated from the power cable, but physically separated or integrated. The star, ring, or shared bus connection may be adopted between the central power supply unit and mode B base station outdoor units or remote power supply units. For example, as shown in the star connection in Figure 11, the ring connection or the shared bus connection may also be adopted among remote power supply units.

The mode B base station outdoor unit and the mode B base station access processing unit complete together the wireless access processing, for example, the mode B base station outdoor unit may include radio frequency, intermediate frequency and antenna; and, the base station access processing unit complete both the baseband and wireless data link layer processing.

The convergence unit converges the wireless access signal received by multiple mode B base station outdoor units and then transmits the signal to mode B base station access processing unit; and distributes the signal generated by the mode B base station access processing unit to multiple mode B base station outdoor units, and then transmits the signal to wireless access users via antenna.

The central power supply unit transforms the mains or DC inputs into high voltage DC outputs, and supply power for the remote mode B base station outdoor unit via wired cable. The central power supply unit also supports the communication among the mode B base station outdoor units. As the out band management path, the central power supply unit may also implement monitoring alarm in both normal or fault state to facilitate the management of the equipment, fault positioning, remote maintenance, etc.

In order to guarantee the power supply, the central power supply unit needs to be configured with the power supply unit to backup power. The power backup unit may be a battery pack, a UPS, a power generation set, or a second mains power.

A second embodiment is illustrated in Figure 12.

As shown in Figure 12, the difference between the system in Figure 12 and the system in Figure 11 lies in that the convergence unit in Figure 11 is substituted by the switch convergence unit in Figure 12, and the multiple mode B base station access processing units are added into the mode A wireless equipment. The backup of "1+1" mode, "N+1" mode or a resource pool redundancy mode through the switch convergence unit may be made among the mode B base station outdoor units of mode A wireless equipment to further improve the reliability of the mode B wireless network communication.

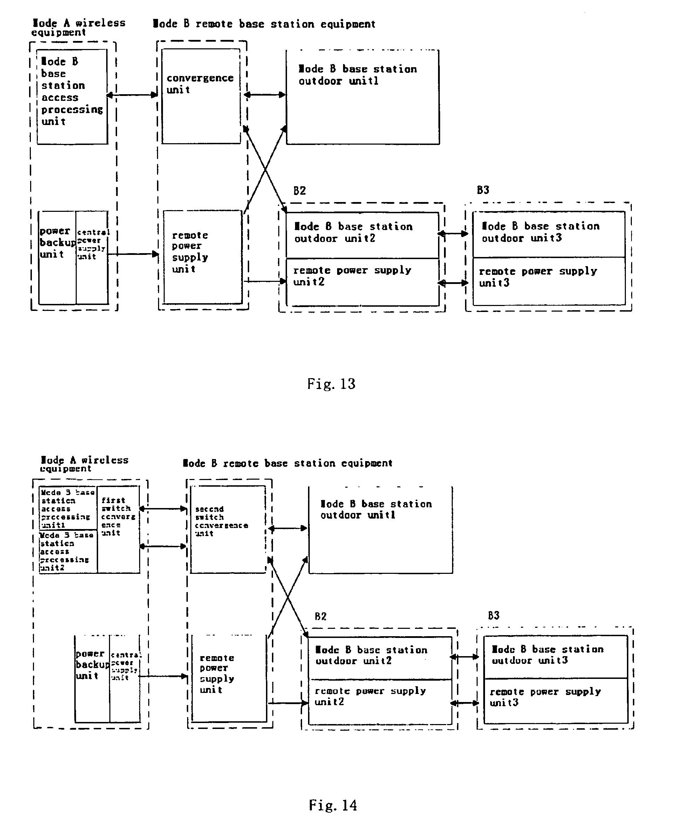

A third embodiment is illustrated in Figure 13.

The difference of the system in Figure 13 and the system in Figure 11 lies in that the convergence unit of mode A wireless equipment in Figure 11 is set in the remote device of Figure 13. The remote device includes convergence unit and remote power supply unit, and the convergence unit and the remote power supply unit may be simple switches capable of remote power supply, so that the connection between mode A wireless equipment and mode B base station outdoor units may be saved.

Mode A wireless equipment is to optimize the site according to mode A wireless network plan, while mode B base station outdoor units are to optimize the site according to the mode B wireless network plan. The mode B base station outdoor unit is converged by the convergence unit, and is remotely connected with the mode A wireless equipment via wired cable. The central power supply unit remotely supplies DC power for the mode B base station remote equipment (2∼5 kilometers), similar to the remote power supply shown in Figure 11; the remote power supply unit connected with the central power supply unit supplies power for the mode B base station outdoor unit or the integrated equipment of mode B base station outdoor unit and the remote power supply unit. The distance is within a certain range, such as 100-200 meters.

A fourth embodiment is illustrated in Figure 14.

As shown in Figure 14, the difference between the system in Figure 14 and the system in Figure 13 lies in that the convergence unit in Figure 13 is substituted by the first and second switch convergence units in Figure 14, and the mode A wireless equipment is connected with remote device via multiple pairs of signals or data lines. The backup of "1+1" mode, "N+1" mode or a resource pool redundancy mode through the switch convergence unit may be made among the mode B base station access processing units of mode A wireless equipment, and the mode B base station outdoor units, or of the signals or data lines between the mode A wireless equipment and the second switch convergence unit to ensure the reliability of the mode B wireless network communication.

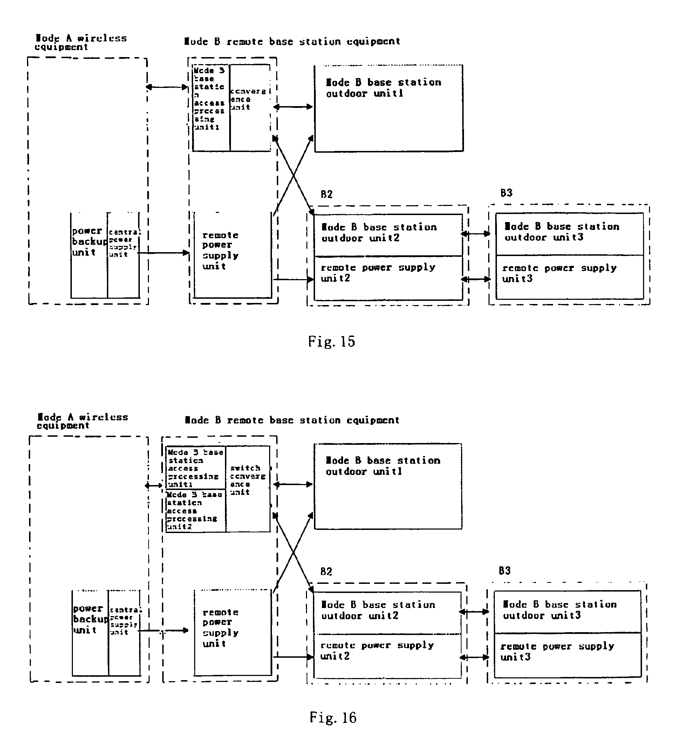

A fifth embodiment is illustrated in Figure 15.

The difference of the system in Figure 15 and the system in Figure 13 lies in that the mode B base station access processing unit of mode A wireless equipment in Figure 13 is set in the remote device in Figure 15. The mode B base station access processing unit, the switch exchange unit and the remote power supply unit in the remote device are integrated to be independent of the base station outdoor unit device.

A sixth embodiment is illustrated in Figure 16.

As shown in Figure 16, the difference of the system in Figure 16 and the system in Figure 15 lies in that the convergence unit in Figure 15 is substituted by switch convergence unit in Figure 16, and the mode B base station access processing unit is connected with the mode B base station outdoor unit via multiple pairs of signal and data line. The backup of "1+1" mode, "N+1" mode or a resource pool redundancy mode through the switch convergence unit may be made among the mode B base station access processing units, and among the mode B base station outdoor units.

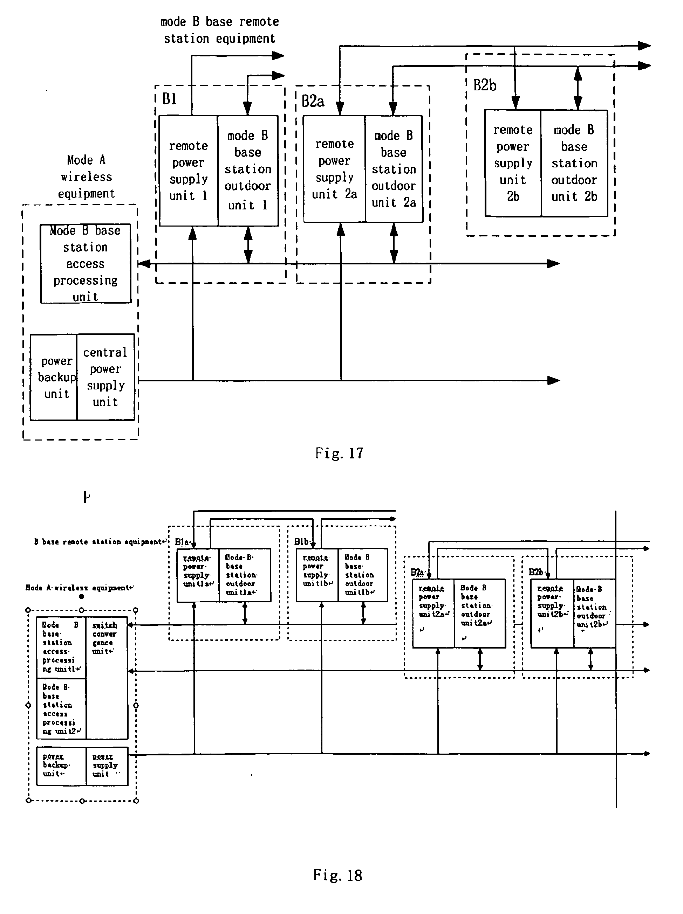

A seventh embodiment is illustrated in Figure 17.

As shown in Figure 17, the difference of the system in Figure 17 and the system in Figure 11 lies in that the remote tree connection is adopted between the mode A wireless equipment in the system of Figure 17 and the mode B remote equipments. For example, mode B base station outdoor unit I and mode B base station outdoor units 2a share one wired cable using frequency division multiplexing or time division multiplexing, and then are remotely connected with mode A wireless equipment; mode B base station outdoor unit 2b is a branch from mode B base station outdoor unit 2a, forming a remote tree connection.

The wired cable remotely connecting local mode A wireless equipment and mode B remote base station equipment, the corresponding signal line and power cable are logically separated but physically separated or integrated.

In Figure 17, the star, ring or shared bus connection may be adopted between the central power supply unit and mode B base station outdoor units; the star, ring or shared bus connection may be also adopted among the remote power supply units.

An eighth embodiment is illustrated in Figure 18.

As shown in Figure 18, the difference of system in Figure 18 and the system in Figure 17 lies in that multiple mode B base station access processing units are added into the system of Figure 18; multiple pairs of signal or data line tree connection is adopted between mode A wireless equipment and mode B base station remote equipment. The backup of "1+1" mode, "N+1" mode or a resource pool redundancy mode through the switch convergence unit may be made among the mode B base station access processing units of mode A wireless equipment or the mode B base station outdoor units.

Similar to that in the system of Figure 17, the star, ring or shared bus connection may be adopted between the central power supply unit and mode B base station outdoor unit, or among the remote power supply units; the star, ring or shared bus connection may be also adopted among the remote power supply units.

In Figure 18, in one branch or different branches, the power supply assistance may be implemented among remote power supply units. For example, the power assistance may be implemented between the remote power supply unit 1a and 1b of the same branch. When a fault occurs in the wired cable between the central power supply unit and remote power supply unit 1a, the remote power supply unit 1a may remotely supply power via the remote power supply unit 1b; however, when a fault occurs in the wired cable between the central power supply unit and remote power supply unit 1b, the remote power supply unit 1b may remotely supply power via the remote power supply unit 1a.

In one branch or different branches, multiple mode B base station outdoor units may constitute multi-antenna transmit diversity or multi-antenna receive diversity. For example, in Figure 18, mode B base station outdoor units 1a and 1b may constitute bi-antenna transmit diversity or bi-antenna receive diversity; mode B base station outdoor units 1a and 2a may also constitute bi-antenna transmit diversity or bi-antenna receive diversity; mode B base station outdoor units 1a, 1b, 2a and 2b may constitute qua-antenna transmit diversity or qua-antenna receive diversity.

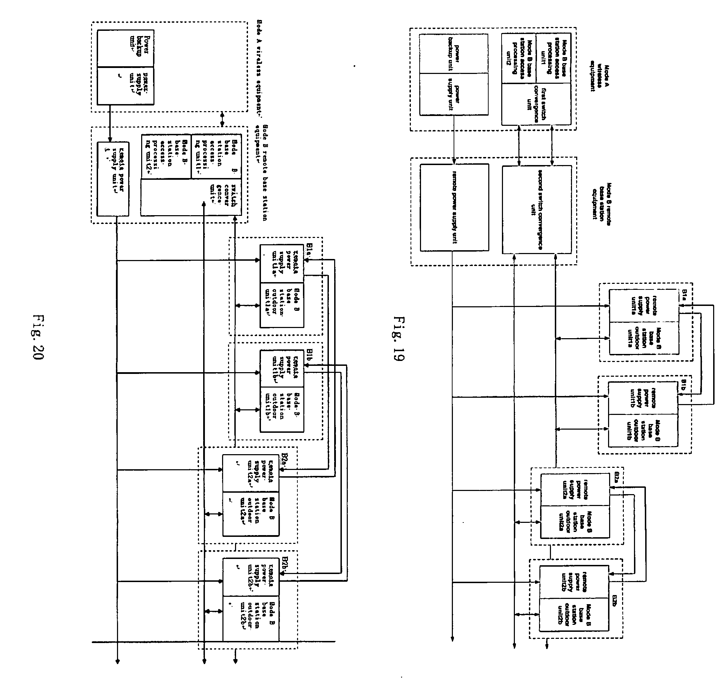

A ninth embodiment is illustrated in Figure 19.

As shown in Figure 19, the difference between the system in Figure 19 and the system in Figure 18 lies in that the switch convergence unit of the mode A wireless equipment in Figure 18 is set in the mode B base station remote equipment of Figure 19 as a part of the base station remote equipment.

A tenth embodiment is illustrated in Figure 20.

As shown in Figure 20, the difference between the system in Figure 20 and the system in Figure 18 lies in that the mode B base station access processing unit of the mode A wireless equipment in Figure 18 is set in the mode B base station remote equipment of Figure 20 as a part of the base station remote equipment.

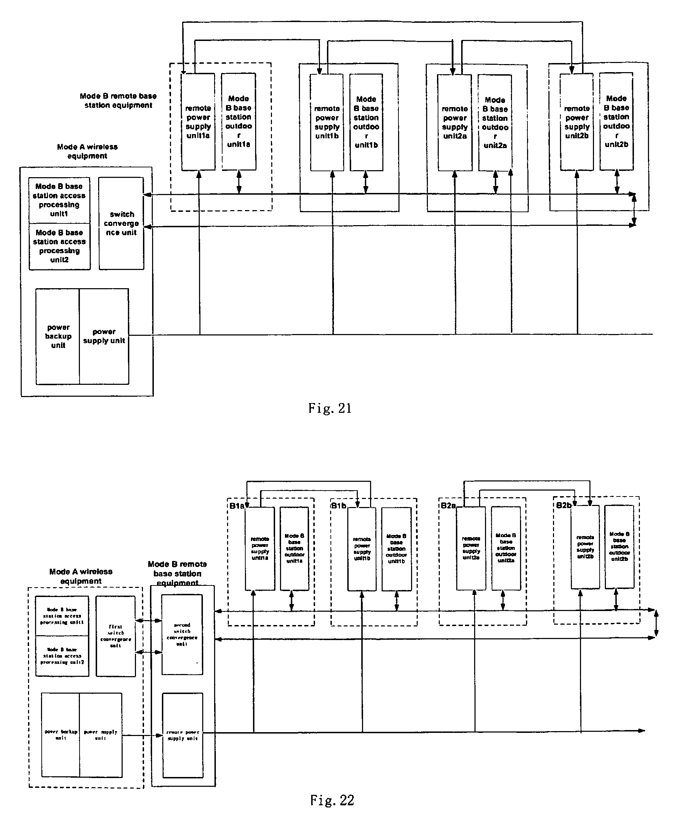

An eleventh embodiment is illustrated in Figure 21.

As shown in Figure 21, the difference between the system in Figure 21 and the system in Figure 18 lies in that the ring connection is adopted between mode A wireless equipment and mode B base station remote equipment. For example, a fault occurs in the wireless signal or data cable between mode B base station outdoor unit 1a and mode A wireless equipment, mode B base station outdoor unit 1a may be connected, via the wireless signal or data cable between mode A wireless equipment and the mode B base station outdoor unit 2b, with mode A wireless equipment, so as to improve the reliability of communication.

In Figure 21, the star, ring or shared bus connection may be adopted between the central power supply unit and mode B base station outdoor unit; the star, ring or shared bus connection may be also adopted among the remote power supply units.

The power supply assistance may be implemented among remote power supply units. Multiple mode B base station outdoor units may constitute multi-antenna transmit diversity or multi-antenna receive diversity. For example, in Figure 21, mode B base station outdoor units 1a and 1b may constitute bi-antenna transmit diversity or bi-antenna receive diversity; mode B base station outdoor units 1a and 2a may also constitute bi-antenna transmit diversity or bi-antenna receive diversity; mode B base station outdoor units 1a, 1b, 2a and 2b may constitute qua-antenna transmit diversity or qua-antenna receive diversity.

A twelfth embodiment is illustrated in Figure 22.

As shown in Figure 22, the difference between the system in Figure 22 and the system in Figure 21 lies in that the switch convergence unit of mode A wireless equipment in Figure 21 is set in the mode B base station remote equipment of Figure 22 as a part of the mode B base station remote equipment.

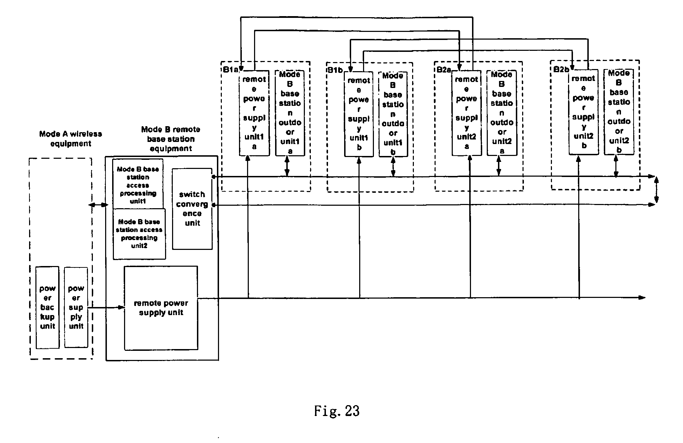

A thirteenth embodiment is illustrated in Figure 23.

As shown in Figure 23, the difference between the system in Figure 23 and the system in Figure 21 lies in that the mode B base station access processing unit of the mode A wireless equipment in Figure 21 is set in the mode B base station remote equipment of Figure 23 as a part of the mode B base station remote equipment.

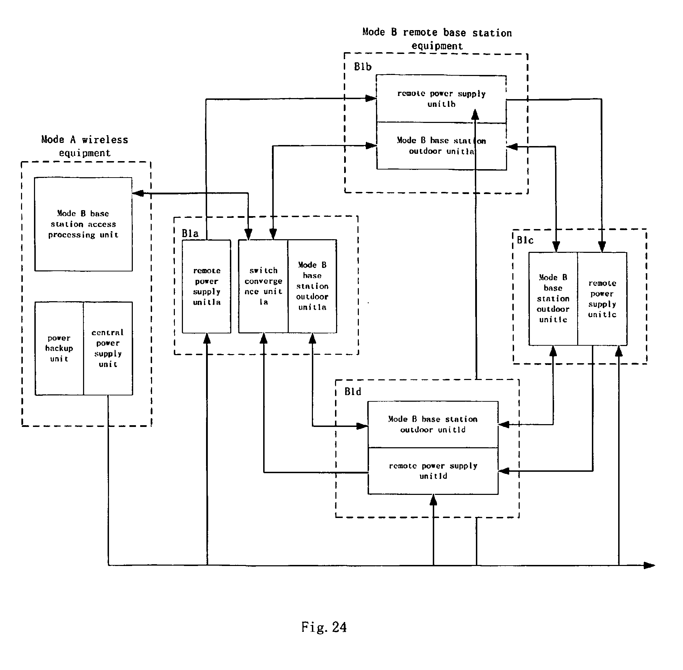

A fourteenth embodiment is illustrated in Figure 24.

As shown in Figure 24, the difference between the system in Figure 24 and the system in Figure 18 lies in that the net connection is adopted among the mode B base station remote equipment of the system in Figure 24. The mode B base station remote equipment B1a and B1b, B1b and B1c, B1c and B1d, B1d and B1a, or B1a and B1c, B1b and B1d may be mutually connected. When there is a failure of wireless signal or data cable occurring between mode B base station outdoor unit1b and mode B base station remote equipment B1a, mode B base station outdoor unit1b may connect to the switch convergence unit 1a of the mode B base station remote equipment B1a through mode B base station outdoor unit1c and /or 1d, connect to mode A wireless equipment through the switch convergence unit 1a of the mode B base station remote equipment B1a.

Star connection, ring connection or shared bus connection may be used to connect central power supply unit with mode B base station outdoor unit or remote power supply unit. Star connection, ring connection or shred bus connection may be applied among remote power supply units.

Remote power supply unit may perform mutual aid in supplying power. Multiple antennas transmit diversity or multiple antennas receive diversity may be constituted among multiple mode B base station outdoor units. For example, in Figure 24, mode B base station outdoor unit1a, 1b, 1c and 1d may form quad antennas transmit diversity or quad antennas receive diversity.

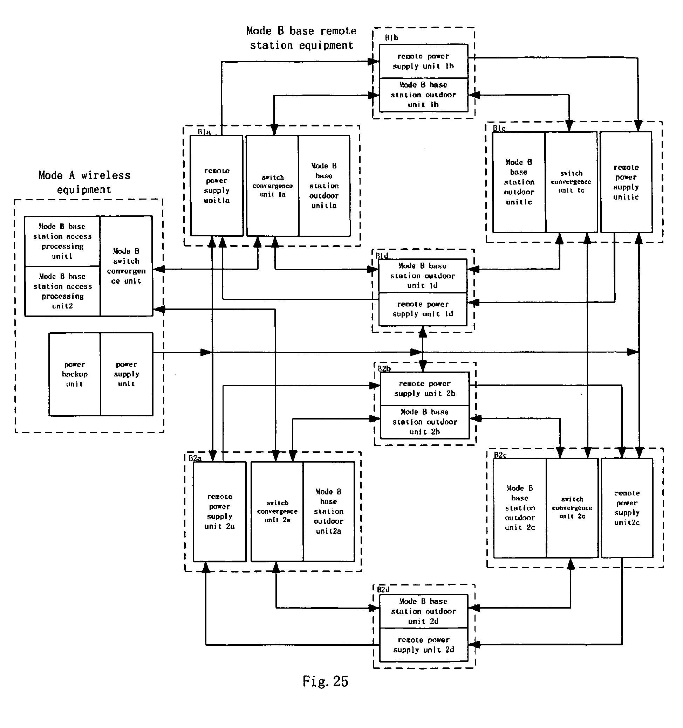

The fifteenth embodiment of the present invention is illustrated in Figure 25.

The difference between systems illustrated in Figures 24 and 25 is that, the system in figure25 includes multiple mode B base station access processing units. Wireless equipment of mode A and mode B base station remote equipment are connected with multiple pairs of signal or data cable as a wet. Through switch convergence unit of mode A wireless equipment, "1+1", "N+1" backup or backup with redundancy of resource pool may be performed among mode B base station access processing units of mode A wireless equipment and among mode B base station outdoor units. For example, when there is a failure of wireless signal or data cable occurring between mode B base station remote equipment B1a and mode A wireless equipment, mode B base station remote equipment B1a, B1b, B1c and B1d may connect to mode A wireless equipment through mode B base station remote equipment B2c and B2a.

Multiple antennas transmit diversity or multiple antennas receive diversity may be constituted among multiple mode B base station outdoor units. For example, in Figure 25 multiple mode B base station outdoor unit 1a, 1b, 1c and 1d may form quad antennas transmit diversity or quad antennas receive diversity, multiple mode B base station outdoor unit 2a, 2b, 2c and 2d may form another group of quad antennas transmit diversity or quad antennas receive diversity.

In a word, through technologies of distributed base stations and remote power supply, the present invention solves the conflict in planning multimode wireless network. Therefore operator A may first select site for mode A wireless equipment based on plan for mode A wireless network and construct mode A wireless cellular network, then according to market demand for wireless access, select site for mode B wireless equipment based on plan for mode B wireless network, and through upgrading mode A wireless equipment, add mode B base station access processing unit, convergence unit and remote power supply unit which are in communication with mode B base station outdoor units. Therefore, a complete structure of multimode wireless integrated access equipment is formed and construction of multimode wireless cellular network in a same area is completed, which insures that plans for multimode wireless network are optimal.

Further, mode B base station remote equipment needs no separate AC power supply, battery cell, UPS, electric generator set or mains as backup for power supply, which reduces cost for construction and maintenance for mode B base station.

2. The present invention provides an integrated access distributed system including a first equipment with wired equipment as first mode and a second equipment with wireless equipment as second mode.

The practical structure of the integrated access distributed system including wireless and wired equipment with different modes is similar to that of multimode wireless access distributed system as illustrated in Figure 11 to Figure 25. The only difference is that a local device as the second equipment set in a wired equipment in the integrated access distributed system.

3. The present invention also provides a multimode wired integrated access distributed system, which may solve the conflict in selecting sites for original mode A wired equipment and newly added mode B wired equipment caused by difference between different network plans for wired access networks with different modes in the prior art.

In the system of the present invention, newly added wired equipment with new mode is divided into a wired local device and a remote wired device, in which the wired local device is set in the existing wired equipment, i.e. has the same position with the existing wired equipment to utilize existing resource. As for the remote wired device, a best site may be selected based on the network plan with the new mode. Then the remote wired device is set at the best site, which insures good communication effect of the network with the new mode.

In the system of the present invention, the wired local device at least includes a power supplier, and may also include wired access processing unit. Corresponding to the wired local device, the remote wired device is a wired terminal.

The remote wired device may be an IAD with remote power supply, and the wired access processing unit may be an Ethernet switch module.

The remote wired device may be an Ethernet switch with remote power supply, and the wired access processing unit may be a router module.

The remote wired device may be an optical network unit ONU with remote power supply, and the wired access processing unit may be an optical line terminal OLT.

The remote wired device may be a small capacity DSLAM cabinet (digitalized user cable access multiplexer), and the wired access processing unit may be a DSLAM access processing module.

In the present invention, the power supply unit may be central power supply unit, which is used to convert mains input (e.g.1 10V/220V AC) or DC input (e.g.-48V/-60V DC) into high voltage DC output (270V DC), and supply power for remote wired terminal via cable line (e.g. twisted pair copper). Distance of remote power supply is related to gauge, number of line pairs, power consumption and output voltage of power supply unit. Generally remote power supply for as far as 2-5 kilometers is available.

The central power supply unit may support the intercommunication with terminals, and as out band management channel of wired terminal, may perform monitoring on normal states and alarm for failures, which facilitates equipment management, failure positioning and remote maintenance.

Additionally, in the present invention, the remote device may include the remote power supply unit, adapted to transform the high voltage DC inputs (e.g. 270V DC) into low voltage DC to supply power locally for the equipment where the remote power supply unit is arranged, or to continually transmit the high voltage DC from the central power supply unit and supply remotely the power for the next level remote base station outdoor units through the wired cable.

The remote power supply unit may support the intercommunication with the wired terminals, and, as out band management channel of wired terminal, may perform monitoring on normal states and alarm for failures, which facilitates equipment management, failure positioning and remote maintenance

The system of the present invention includes a convergence unit that is used to converge access signals received by multiple wired terminals and send to the wired access processing unit; and distribute signals generated by wired access processing unit to multiple wired terminals, further to wired access users.

The convergence unit of the present invention may be set in different equipment.

Being set in wired local device, the convergence unit converges and sends cable signals received by the wired terminal of the remote wired device to the wired access processing unit of the wired local device; and sends signals generated by the wired access processing unit of the wired local device to the wired terminal of the remote wired device.

Being set in remote wired device, the convergence unit is remotely connected to the wired access processing unit of the wired local device and remotely connected to the wired terminal of the remote wired device via cable lines, and is used to converge wired access signals received by multiple wired terminals of remote wired device and send to the wired access processing unit of the wired local device, and send signals generated by wired access processing unit of the wired local device to the wired terminal of the remote wired device.

Being set in remote wired device, the convergence unit is connected to the wired access processing unit of the remote wired device and remotely connected to the wired terminal of the remote wired device via cable lines, and is used to converge wired access signals received by multiple wired terminals of remote wired device and send to the wired access processing unit of the remote wired device, and send signals generated by wired access processing unit of the remote wired device to the wired terminal of the remote wired device.

In the system of the present invention, when there are multiple wired access processing units, each of them is in communication with the wired terminal via the switch convergence unit. Backup is implemented among the multiple wired access processing units based on the switch convergence unit.

Being set in the remote wired device or wired local device, the switch convergence unit converges cable signals received by the wired terminal of the remote wired device, and then selectively accesses to one of the wired access processing units of the remote wired device or wired local device; and sends signals generated by one of the wired access processing units of the remote wired device or wired local device to the wired terminal of the remote wired device.

Further more, the switch convergence unit may be set in the remote wired device and wired local device respectively, a first switch convergence unit set in the wired local device is remotely connected to a second switch convergence unit set in the remote wired unit, and the second switch convergence unit is also remotely connected to the wired terminal. The second switch convergence unit is used to converge and then send wired access signals received by multiple wired terminals of remote wired devices to the first switch convergence unit. Then the first switch convergence unit selectively accesses the signals to one of the wired access processing units of the wired local device, and sends signals generated by each wired access processing unit of the wired local device to the second switch convergence unit. The second switch convergence unit selectively accesses the signals to one of the wired terminals of the remote wired device.

Embodiments will be given to describe the system of the present invention.

It is assumed in the following description that mode A wired access network is a basic network, mode B wired access network is a newly added network, mode A wired access equipment set in the basic network serves as a local communication equipment.

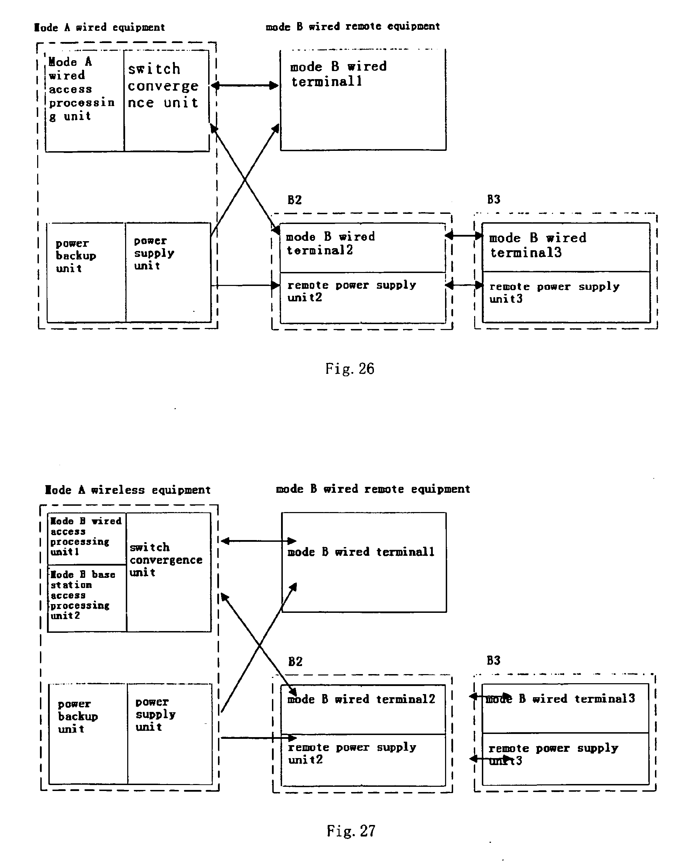

The first embodiment of the present invention is as illustrated in Figure 26, including mode A wired local equipment, mode B wired remote equipment, convergence unit, mode B wired access processing unit, central power supply unit, remote power supply unit and power backup unit. Local equipment includes some existing equipment of the mode A wired access network. The mode B wired remote equipment includes a mode B wired terminal or an integrated equipment combining mode B wired terminal with remote power supply unit.

In the present invention, the mode B wired access processing unit and the convergence unit are set in the mode A wired local equipment that selects optimal site based on plan for mode A wired network. The mode B wired terminal is set as remote device and selects optimal site based on plan for mode B wired network.

The mode B wired terminal equipment is remotely connected to mode A wired local equipment in a star connection via cable lines (e.g. fiber or twisted pair copper). When there are multiple mode B wired terminals, each of them may be remotely connected to each other via cable lines. For example, in Figure 26 mode B wired terminals 2 and 3 are remotely connected to each other via cable line.

The central power supply unit set in the mode A wired equipment supplies power for mode B wired access processing unit 1 and mode B wired remote terminal1.

The remote power supply unit2 in the mode B wired remote equipment is remotely connected to the central power supply unit via cable line and supplies power for the mode B wired terminal2. The remote power supply unit2 in the mode B wired remote equipment is further remotely connected to remote power supply unit3 in next level via cable line and supplies power for mode B wired terminal3 in next level.

The remote power supply unit is logically separate from the mode B wired terminal, but may be separate from or integrated with the mode B wired terminal physically.

In the drawing, there are cable lines between the mode A wired local equipment and mode B wired remote equipment for remote connection. Signal cable between the mode A wired local equipment and mode B wired remote equipment is separate from power cable, but may be separate from or integrated with the power cable physically. When the signal cable and the power cable are integrated a same cable line may be adopted.

Star connection, ring connection or shared bus connection may be adopted between the central power supply unit and the mode B wired terminal or among the remote power supply units. Figure 26 illustrates a star connection. A star connection, ring connection or shared bus connection also may be adopted among remote power supply units.

The mode B wired terminal and the mode B wired access processing unit perform wired access processing. When multiple mode B wired terminals are involved the convergence unit is needed to achieve communication with the mode B wired access processing unit, that is the convergence unit converges cable access signals received by multiple mode B wired terminals and then sends to the mode B wired access processing unit, and distributes signals generated by the mode B wired access processing unit to multiple mode B wired terminals, further to mode B wired access users.

The central power supply unit converts mains input (e.g.110V/220V AC) or DC input (e.g.-48V/-60V DC) into high voltage DC output (270V DC), and supply power for the mode B wired remote terminal via cable line (e.g. twisted pair copper). Distance of remote power supply is related to gauge, number of line pairs, power consumption of the mode B wired terminal and output voltage of power supply unit. Generally remote power supply for as far as 2-5 kilometers is available.

The central power supply unit may support communication with the mode B wired terminals, and as the out band management channel of the mode B wired terminal may perform monitoring on normal states and alarm for failures, which facilitate equipment management, failure positioning and remote maintenance. The power backup unit may be battery cell, UPS, electric generator set or mains. In order to guarantee the power supply, the central power supply unit needs to be configured with the power supply unit to backup power. The power backup unit may be a battery pack, a UPS, a power generation set, or a second mains power.

The second embodiment of the present invention is illustrated in Figure 27.

The difference between systems illustrated in Figure 27 and Figure 26 is that the convergence unit in Figure 26 is substituted by the switch convergence unit in Figure 27, the mode B wired access processing unit is added into the mode A wired local equipment. Through the switch convergence unit, "1+1", "N+1" backup or backup with redundancy of resource pool may be performed among the mode B wired access processing units of mode A wired equipment and among the mode B wired terminals.

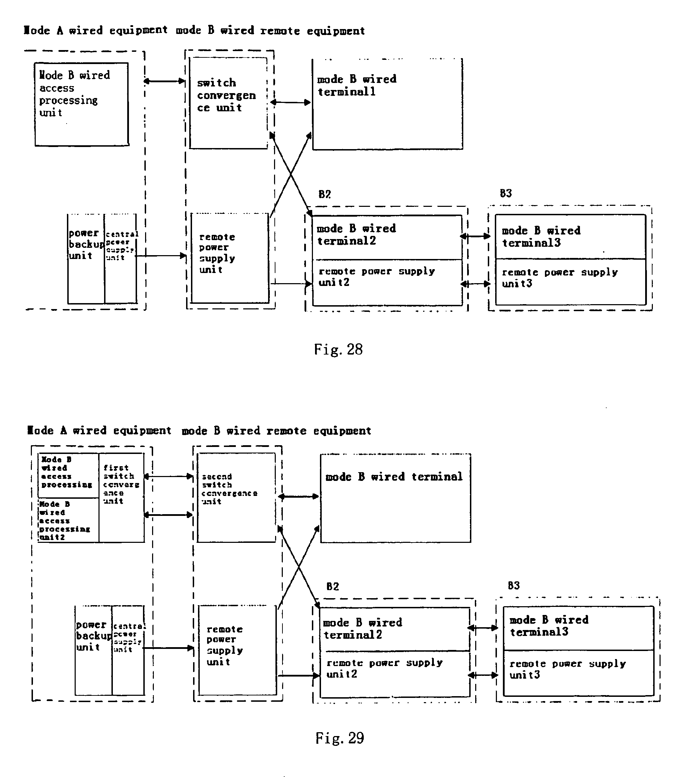

The third embodiment of the present invention is illustrated in Figure 28.

The difference between systems illustrated in Figure 28 and Figure 26 is that the convergence unit of the mode A wired local equipment in Figure 26 is set in the mode B wired terminal in Figure 28. The mode B wired remote equipment includes convergence unit and remote power unit. For example, the convergence unit and the remote power unit may be a simple switch with remote power supply through which cable lines between mode A wired equipment and mode B wired terminal may be saved.

In Figure 28, the mode A wired equipment selects optimal site based on plan for mode A wired network, and the mode B wired equipment selects optimal site based on plan for mode B wired network. The mode B wired terminals are converged by the mode B wired remote equipment, and are remotely connected to the mode A wired equipment via cable lines. The central power supply unit of the mode A wired equipment remotely supplies power with DC (2-5kilometers) for the mode B wired terminal. The remote power supply unit of the mode B wired terminal supplies power with DC (e.g. 100-200 meters) for mode B wired terminal or the integrated equipment combining mode B wired terminal with remote power supply unit.

The fourth embodiment of the present invention is illustrated in Figure 29.

The difference between the systems illustrated in Figure 29 and Figure 28 is that the convergence unit in Figure 28 is substituted by the switch convergence unit in Figure 29, the mode A wired local equipment is connected to the mode B wired terminal via pairs of signal cable or data cable. Through the switch convergence unit, "1+1", "N+1" backup or backup with redundancy of resource pool may be performed among the mode B wired access processing units of mode A wired equipment, among the mode B wired terminals and for the signal cable or data cable between the mode A wired equipment and the mode B wired terminal.

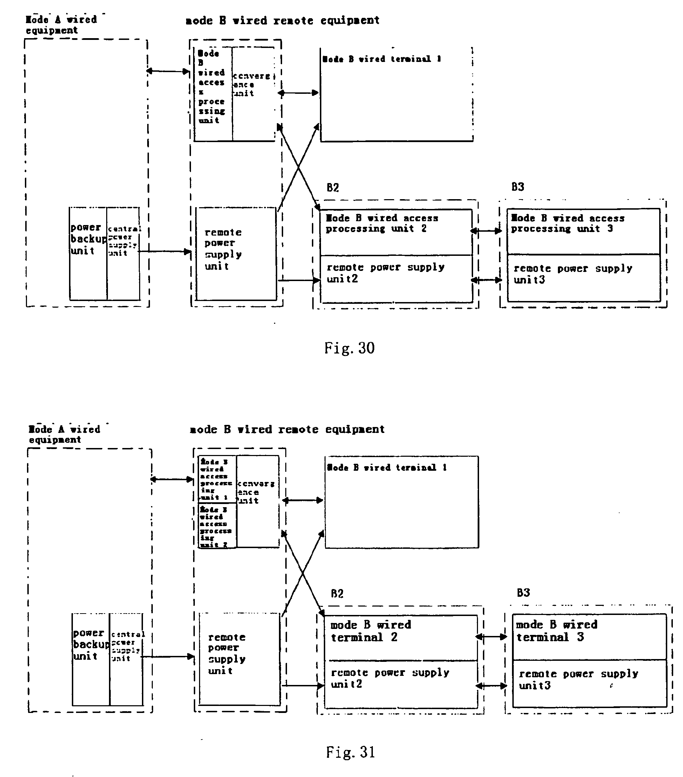

The fifth embodiment of the present invention is illustrated in Figure 30.

The difference between systems illustrated in Figure 30 and Figure 28 is that the mode B wired access processing unit of mode A wired equipment is also set in the mode B wired terminal in Figure 30. The mode B wired remote equipment is composed of mode B wired access processing unit, switch convergence unit and remote power supply unit, i.e. only an existing power supply unit in the existing mode A wired equipment is utilized.

The sixth embodiment of the present invention is illustrated in Figure 31.

The difference between systems illustrated in Figure 31 and Figure 30 is that the convergence unit in Figure 30 is substituted by the switch convergence unit in Figure 31, the mode A wired local equipment is connected to the mode B wired terminal via pairs of signal cable or data cable. Through the switch convergence unit, "1+1", "N+1" backup or backup with redundancy of resource pool may be performed among the mode B wired access processing units and among the mode B wired terminals, thus reliability of communication is improved.

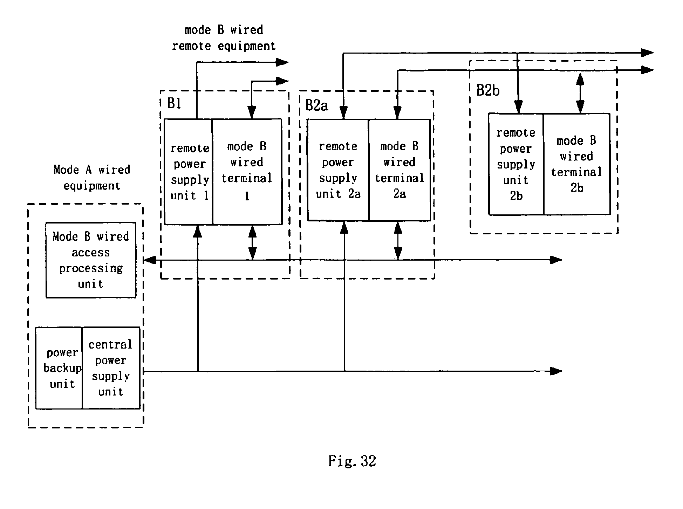

The seventh embodiment of the present invention is illustrated in Figure 32.

The difference between systems illustrated in Figure 32 and Figure 26 is that the in the system of Figure 32 , the mode A wired local equipment and the mode B wired terminal is remotely connected in tree structure. For example, in Figure 32, mode B wired terminals 1 and 2a share a cable line in a frequency division multiplexing or time division multiplexing mode to remotely connect to the mode A wired equipment, and the mode B wired terminal 2b is a branch of the mode B wired terminal 2a.

In Figure 32, there are cable lines set between the mode A wired local equipment and mode B wired remote equipment, and the signal cable and power cable between the mode A wired local equipment and mode B wired remote equipment are logically separate, bur may be separate or integrated physically.

In Figure 32, a star connection, ring connection or shared bus connection may be adopted between the central power supply unit and the mode B wired terminal or the remote power supply unit. A star connection, ring connection or shared bus connection also may be adopted among remote power supply units.

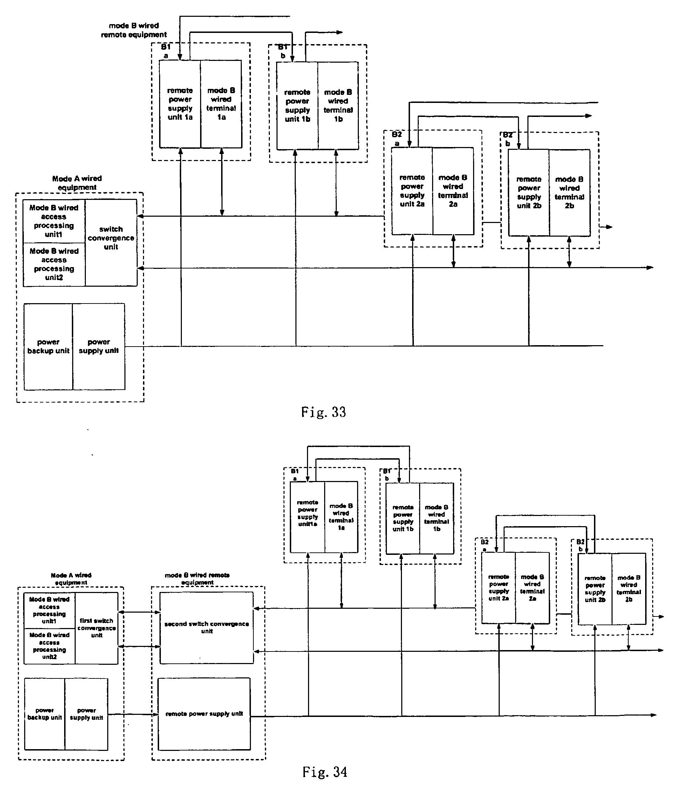

The eighth embodiment of the present invention is illustrated in Figure 33.

The difference between systems illustrated in Figure 33 and Figure 32 is that multiple mode B wired acceded processing units are added into the system in Figure 33, and the mode A wired local equipment is in tree connection with the mode B wired terminal via pairs of signal cable or data cable. Through the switch convergence unit, "1+1", "N+1" backup or backup with redundancy of resource pool may be performed among the mode B wired access processing units of the mode A wired equipment and among the mode B wired terminals.

A star connection, ring connection or shared bus connection may be adopted between the central power supply unit and the mode B wired terminal or the remote power supply unit. A star connection, ring connection or shared bus connection also may be adopted among remote power supply units.

As illustrated in Figure 33, at a same branch or at different branches, power supplying assistance may be performed among remote power supply units. For example, at the same branch in Figure 33, remote power supply units1a and1b perform power supplying assistance between each other. When there is a connection failure of cable line between the central power supply unit and the remote power supply unitla, the remote power supply unit1a may remotely supply power through the remote power supply unit 1b. When there is a connection failure of cable line between the central power supply unit and the remote power supply unit1b, the remote power supply unit1b may remotely supply power through the remote power supply unitla.

The ninth embodiment of the present invention is illustrated in Figure 34.

The difference between systems illustrated in Figure 34 and Figure 33 is that the switch convergence unit of the mode A wired equipment in Figure 33 is also set in the mode B wired remote equipment in Figure 34 as a part of the remote wired equipment. Therefore, a switch convergence function is realized, cable lines between the mode B wired terminal and the mode A wired equipment are simplified and saved.

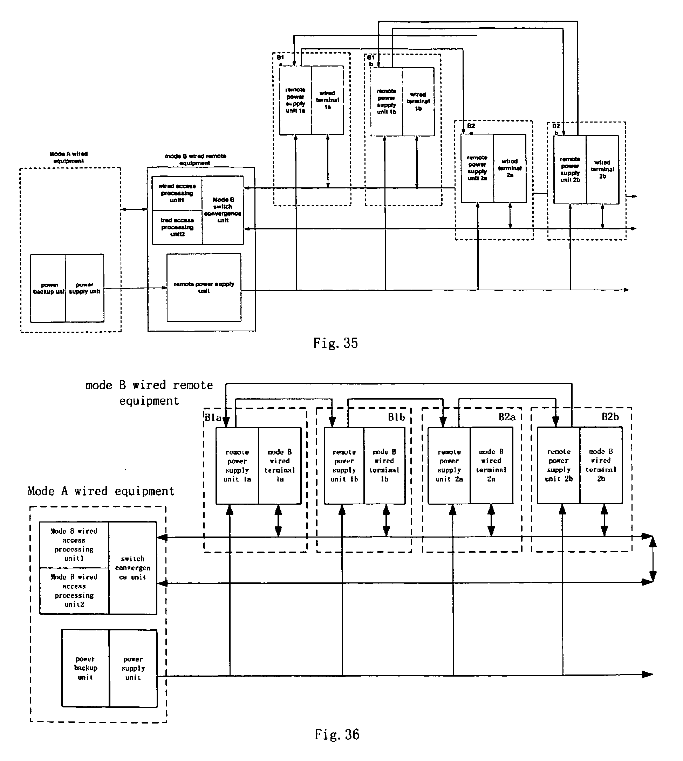

The tenth embodiment of the present invention is illustrated in Figure 35.

The difference between systems illustrated in Figure 35 and Figure 33 is that the mode B wired access processing unit of the mode A wired equipment in the system of Figure 33 is also set in the mode B wired remote equipment in Figure 35, that is the mode B wired equipment and the mode A wired equipment only share the power supply unit and the power backup unit.

The eleventh embodiment of the present invention is illustrated in Figure 36.

The difference between systems illustrated in Figure 36 and Figure 33 is that the mode A wired local equipment in the system of Figure 36 is in ring connection with the mode B wired terminal. For example, when there is a failure of cable signal or data cable lines occurring between the mode B wired terminal 1a and the mode A wired equipment, the mode B wired terminal 1a may connect to the mode A wired equipment via the cable signal or data cable lines between the mode B wired terminal 2b and the mode A wire equipment.

Similarly, a star connection, ring connection or shared bus connection may be adopted between the central power supply unit and the mode B wired terminal or the remote power supply unit. A star connection, ring connection or shared bus connection also may be adopted between remote power supply units.

Power supplying assistance may be performed among the remote power supply units. When there is a remote power supply unit of the mode B wired terminal breakdown, switching to another normal remote power supply unit may be performed. Then the remote power supply unit in working order will supply power for the mode B wired terminal.

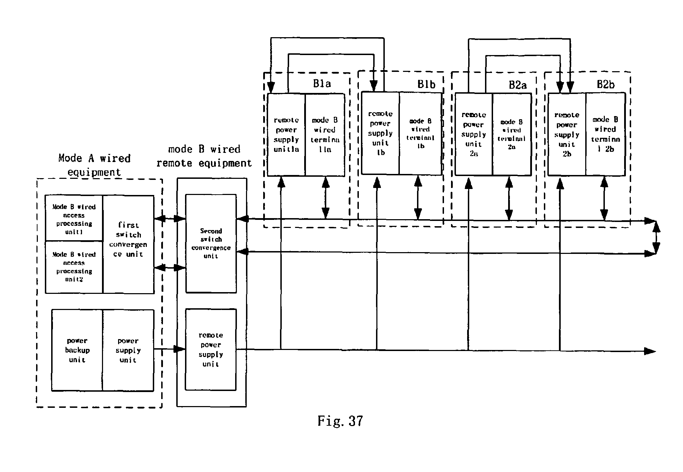

The twelfth embodiment of the present invention is illustrated in Figure 37.

The difference between systems illustrated in Figure 37 and Figure 36 is that he switch convergence unit of the mode A wired local equipment in the system of Figure 36 is also set in the mode B wired terminal in Figure 37, that is the mode A wired equipment is in communication with the mode B wired remote equipment via a first switch convergence unit and a second switch convergence unit.

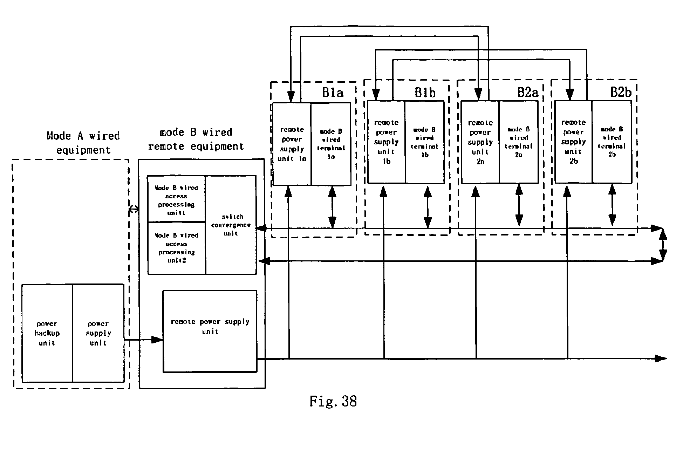

The thirteenth embodiment of the present invention is illustrated in Figure 38.

The difference between systems illustrated in Figure 38 and Figure 36 is that the mode B wired access processing unit of the mode A wired equipment in the system of Figure 36 is also set in the mode B wired remote equipment in Figure 38, that is the mode B wired equipment and the mode A wired equipment only share the power supply unit and the power backup unit of the mode A wired equipment.

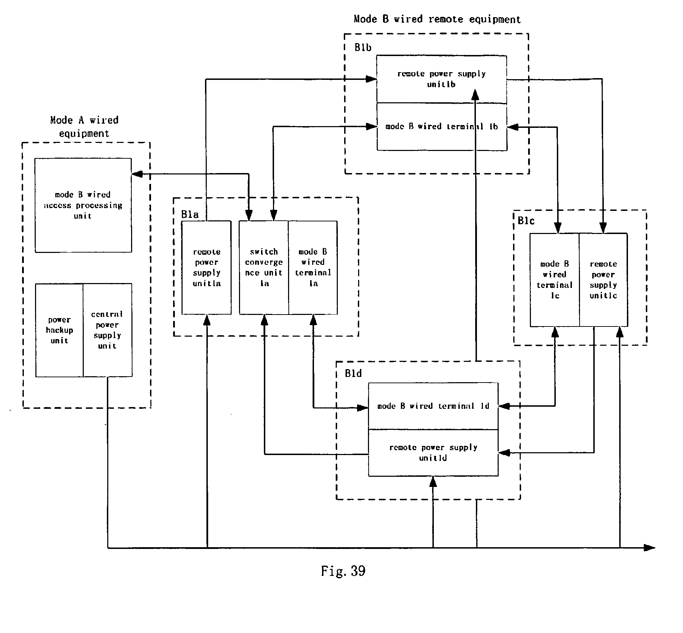

The fourteenth embodiment of the present invention is illustrated in Figure 39.

The difference between systems illustrated in Figure 39 and Figure 33 is that the mode B wired terminals in the system of Figure 39 are in net connection. For example, the mode B wire terminalsB1a and B1b may be connected to each other, as well as B1c and B1d, B1b and B1c, B1d and B1a, B1a and B1c, B1b and B1d. When there is a failure of cable signal or data cable lines occurring between the mode B wired terminal 1b and the mode B wired terminal B1a, the mode B wire terminal 1b may connect to the switch convergence unit 1a of the mode B wired terminal B1a through the mode B wired terminal 1c and/or 1d, and then connect to the wired equipment though the switch convergence unit 1a of the mode B wired terminal B1a.

In Figure 39, a star connection, ring connection or shared bus connection may be used to connect central power supply unit with mode B wired terminal or remote power supply unit. A star connection, ring connection or shred bus connection may be applied to remote power supply units.

Further, power supplying assistance may be performed among the remote power supply units, which improves reliability of power supply unit.

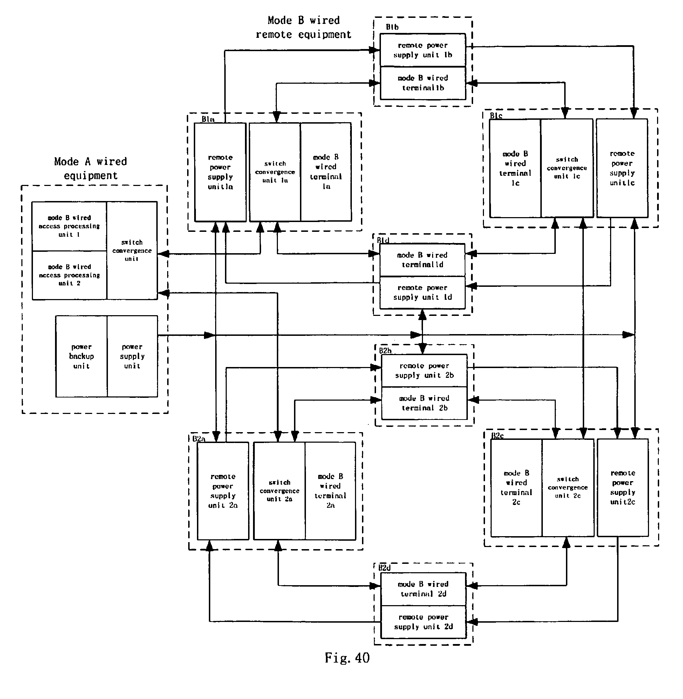

The fifteenth embodiment of the present invention is illustrated in Figure 40.

The difference between systems illustrated in Figure 40 and Figure 39 is that multiple mode B wired access processing units are added into the system in Figure 40, and the mode A wired local equipment is in net connection with the mode B wired terminal via pairs of signal cable or data cable. Through the switch convergence unit of the mode A wired equipment, "1+1", "N+1" backup or backup with redundancy of resource pool may be performed among the mode B wired access processing units of the mode A wired equipment and among the mode B wired terminals. For example, when there is a failure of cable signal or data cable line between the mode B wired terminal B1a and the mode A wired equipment, the mode B wired terminals B1a, B1b, B1c and B I d may connect to the mode A wired equipment through the mode B wired terminals B2c and B2a.

In conclusion, the present invention solves the conflict in plans for mode A wired network and mode B wired network through technologies of distributed equipment and remote power supply.

In the present invention, operator B may first select a site for mode A wired equipment based on plan for mode A wired network and construct wire access network, then according to market demand for wired access, select site for mode B wired terminal based on plan for mode B wired network, and through upgrading mode A wired equipment to add a wired access processing unit, convergence unit and remote power supply unit which are in communication with the mode B wired terminals. Therefore, a complete structure of multimode wired integrated access equipment is formed and construction of multimode wired access network in a same area is completed, which insures that plans for multimode wireless network are optimal.

Further, setting the mode B wired remote equipment needs no separate AC power supply, battery cell, UPS, electric generator set or mains as backup for power supply, which effectively reduces cost for construction and maintenance for mode B wired network.

4. The present invention provides an integrated access distributed system in which a wireless equipment serves as the first equipment with a first mode and a wired equipment serves as second equipment with a second mode.

The practical structure of the integrated access distributed system including wireless and wired equipment with different modes is similar to that of the multimode wireless access distributed system as illustrated in Figure 26 to Figure 40. The only difference is that a wired local device as the second equipment set in the wired equipment i.e. the mode A wired equipment, is set as the second equipment in a wireless equipment i.e. the base station, in the integrated access distributed system.

Additional advantages and modifications may be readily recognized by a person of ordinary skill in the art. Therefore, the invention in its broader aspects is not limited to the specific details and representative embodiments shown and described herein. Accordingly, various modifications and variations may be made without departing from the scope of the invention as defined by the appended claims.

## Claims

1. A multimode network communication system, comprising first equipment based on a first mode and second equipment based on a second mode, **characterized in that**: the second equipment comprises a local device and at least two remote devices which are interconnected with wired cables, the local device being arranged in the first equipment and the remote devices being independent of the first equipment.

2. The multimode network communication system according to claim 1, wherein one of the at least two remote devices is remotely connected with the local device via wired cables.

3. The multimode network communication system according to claim 1 or 2, wherein:
in the situation that the second equipment is wireless equipment, the local device comprises a power supply unit and a base station access processing unit, and the remote devices comprise a base station outdoor unit; or the local device comprises the power supply unit and the remote devices comprise a base station outdoor unit and a base station access processing unit; and
in the situation that the second equipment is wired equipment, the local device comprises a power supply unit and a wired access processing unit and the remote devices comprise a wired terminal; or the local device comprises a power supply unit and the remote devices comprise a wired terminal and a wired access processing unit.

4. The multimode network communication system according to claim 3, wherein the power supply unit comprises a central power supply unit and a power backup unit.

5. The multimode network communication system according to claim 3, wherein the remote device further comprises a remote power supply unit; and
the remote power supply unit is connected with the power supply unit arranged in the local device via the wired cables, and acquires electric energy to supply power for the remote device;
or,
the remote power supply unit acquires local electric energy, and is connected with the base station outdoor unit or wired terminal arranged in the remote device via the wired cables, to supply power for the base station outdoor unit or wired terminal;
or,
the remote power supply unit is connected with a remote power supply unit of a next level remote device via the wired cables, to supply power for the next level remote device.

6. The multimode network communication system according to claim 4, wherein
the central power supply unit is arranged in the first equipment to supply power for the first equipment, connected with the remote device via the wired cables to supply power for the remote device, and/or connected with the base station outdoor unit or wired terminal via the wired cables to supply power for the base station outdoor unit or wired terminal;
the power backup unit is arranged in the first equipment to be the backup power supply for the central power supply unit.

7. The multimode network communication system according to claim 3, wherein the local device and /or the remote device further comprises a convergence unit, wherein
the convergence unit is arranged in the local device, adapted to converge and then access signals received by the base station outdoor unit or wired terminal arranged in the remote device to the base station access processing unit or wired access processing unit arranged in the local device, and to send signal generated by the base station access processing unit or wired access processing unit arranged in the local device to the base station outdoor unit or wired terminal arranged in the remote device;
or,
the convergence unit is arranged in the remote device and remotely connected with the base station access processing unit or wired access processing unit arranged in the local device via wired cables and remotely connected with the base station outdoor unit or wired terminal arranged in the remote device, adapted to converge and transmit signals received by the base station outdoor unit or wired terminal arranged in multiple remote devices to the base station access processing unit or wired access processing unit arranged in the local device, and to send signal generated by the base station access processing unit or wired access processing unit arranged in the local device to the base station outdoor unit or wired terminal arranged in the remote device;
or,
the convergence unit is arranged in the remote device and connected with the base station access processing unit or wired access processing unit arranged in the remote device via wired cables and remotely connected with the base station outdoor unit or wired terminal arranged in the remote device, adapted to converge and then transmit signals received by the base station outdoor unit or wired terminal arranged in multiple remote devices to the base station access processing unit or wired access processing unit arranged in the remote device, and to send signal generated by the base station access processing unit or wired access processing unit arranged in the remote device to the base station outdoor unit or wired terminal arranged in the remote device.

8. The multimode network communication system according to claim 3, wherein,
if the second equipment is wireless equipment,
the base station access processing unit comprises: a wireless data upper link layer processing module and at least one of a wireless data link layer processing module, a base band processing module, an intermediate-frequency processing module and radio frequency post processing module; and
the base station outdoor unit comprises: an antenna and an radio frequency pre processing module, and at least one of the radio frequency post processing module, the intermediate frequency processing module, the base band processing module and the wireless data link layer processing module.

9. The multimode network communication system according to claim 3, wherein in the situation that the second equipment is wired equipment,
the wired terminal is an Integrated Access Equipment, IAD, with remote power supply, and the wired access processing unit is an Ethernet switch module;
or,
the wired terminal is an Ethernet switch with remote power supply, and the wired access processing unit is a router module;
or,
the wired terminal is an Optical Network Unit, ONU, with remote power supply, and the wired access processing unit is an Optical Line Terminal, OLT;
or,
the wired terminal is a Digital Subscriber Line Access Multiplexer, DSLAM, cabinet with remote power supply, and the wired access processing unit is a DSLAM access processing module.

10. The multimode network communication system according to claim 3, wherein, in the situation that there are multiple base station access processing units or wired access processing units, each of the base station access processing units or wired access processing units communicates, via a switch convergence unit, with the base station outdoor unit or the wired terminal; and the base station access processing unit or wired access processing unit provides backup for each other on the base of the switch convergence unit.

11. The multimode network communication system according to claim 10, wherein:
the switch convergence unit is arranged in the local device or remote device, adapted to converge and then selectively access signals received by the base station outdoor unit or wired terminal arranged in the remote device to a base station access processing unit or wired access processing unit arranged in the local device or remote device, and to send signal generated by the base station access processing unit or wired access processing unit arranged in the local device or remote device to the base station outdoor unit or wired terminal arranged in the remote device;
or,
two switch convergence units are respectively arranged in the local device and remote device, a first switch convergence unit arranged in the local device is remotely connected with a second switch convergence unit arranged in the remote device, and the second switch convergence unit is also remotely connected with the base station outdoor unit or the wired terminal, wherein, the second switch convergence unit is adapted to send signals received by the multiple base station outdoor units or wired terminals arranged in the remote devices to the first switch convergence unit which selectively accesses the signals to one of the base station outdoor units or wired access processing units arranged in the local device; the first switch convergence unit is adapted to send signals generated by each of the base station access processing unit or wired access processing unit arranged in the local device to the second switch convergence unit which selectively accesses the signals to the one of the base station outdoor units or wired terminals arranged in the remote device.

12. The multimode network communication system according to claim 3, wherein,
in the situation that the second equipment is wireless equipment, the multiple base station outdoor units are configured into at least one multi-antenna transmit diversity or multi-antenna receive diversity in the situation that there are multiple base station outdoor units.

13. The multimode network communication system according to claims 1 to 2, wherein, the remote devices are interconnected with each other in star, ring or net structure in the situation that there are multiple remote devices.

14. The multimode communication system according to claims 13, wherein the remote power supply units are connected with each other in the term of star, ring or shared bus in the situation that the remote devices each comprises the remote power supply unit.

15. The multimode network communication system according to claim 14, wherein the remote power supply units are adapted to provide backup connections to each other, and in the situation that any one of the base station outdoor units or wired terminals fails, the base station outdoor unit or wired terminal is supplied with power by an available remote power supply unit after power switchover from a failed remote power supply unit to an available remote power supply unit is completed.

16. The multimode network communication, system according to claim 1 or 2, wherein the first equipment is wired equipment or wireless equipment.

17. The multimode network communication system according to claim 16, wherein:
in the situation that both the first equipment and the second equipment are wired equipment, the first equipment and the second equipment constitute a multimode wired network communication system;
in the situation that the first equipment is wired equipment and the second equipment is wireless equipment, or the first equipment is wireless equipment and the second equipment is wired equipment, the first equipment and the second equipment constitute a multimode wired and wireless network communication system; and
in the situation that both the first equipment and the second equipment are wireless equipment, the first equipment and the second equipment constitute a multimode wireless network communication system.

## Patentansprüche

1. Netzkommunikationssystem mit mehreren Betriebsarten, umfassend erstes Gerät auf der Basis einer ersten Betriebsart und zweites Gerät auf der Basis einer zweiten Betriebsart, **dadurch gekennzeichnet, dass** das zweite Gerät eine lokale Einrichtung und mindestens zwei entfernte Einrichtungen umfasst, die mit verdrahteten Kabeln verbunden sind, wobei die lokale Einrichtung in dem ersten Gerät angeordnet ist und die entfernten Einrichtungen von dem ersten Gerät unabhängig sind.

2. Netzkommunikationssystem mit mehreren Betriebsarten nach Anspruch 1, wobei eine der mindestens zwei entfernten Einrichtungen über verdrahtete Kabel mit der lokalen Einrichtung fernverbunden ist.

3. Netzkommunikationssystem mit mehreren Betriebsarten nach Anspruch 1 oder 2, wobei
falls das zweite Gerät drahtloses Gerät ist, die lokale Einrichtung eine Stromversorgungseinheit und eine Basisstationszugangs-Verarbeitungseinheit umfasst und die entfernten Einrichtungen eine Basisstations-Außeneinheit umfassen; oder die lokale Einrichtung die Stromversorgungseinheit umfasst und die entfernten Einrichtungen eine Basisstations-Außeneinheit und eine Basisstationszugangs-Verarbeitungseinheit umfassen; und
falls das zweite Gerät verdrahtetes Gerät ist, die lokale Einrichtung eine Stromversorgungseinheit und eine Verarbeitungseinheit für verdrahteten Zugang umfasst und die entfernten Einrichtungen ein verdrahtetes Endgerät umfassen; oder die lokale Einrichtung eine Stromversorgungseinheit umfasst und die entfernten Einrichtungen ein verdrahtetes Endgerät und eine Verarbeitungseinheit für verdrahteten Zugang umfassen.

4. Netzkommunikationssystem mit mehreren Betriebsarten nach Anspruch 3, wobei die Stromversorgungseinheit eine zentrale Stromversorgungseinheit und eine Stromreserveeinheit umfasst.

5. Netzkommunikationssystem mit mehreren Betriebsarten nach Anspruch 3, wobei die entfernte Einrichtung ferner eine entfernte Stromversorgungseinheit umfasst; und
die entfernte Stromversorgungseinheit über die verdrahteten Kabel mit der in der lokalen Einrichtung angeordneten Stromversorgungseinheit verbunden ist und elektrische Energie zur Versorgung der entfernten Einrichtung mit Strom beschafft;
oder
die entfernte Stromversorgungseinheit lokale elektrische Energie beschafft und über die verdrahteten Kabel mit der Basisstations-Außeneinheit oder dem in der entfernten Einrichtung angeordneten verdrahteten Endgerät verbunden ist, um die Basisstations-Außeneinheit oder das verdrahtete Endgerät mit Strom zu versorgen;
oder
die entfernte Stromversorgungseinheit über die verdrahteten Kabel mit einer entfernten Stromversorgungseinheit einer entfernten Einrichtung der nächsten Ebene verbunden ist, um die entfernte Einrichtung der nächsten Ebene mit Strom zu versorgen.

6. Netzkommunikationssystem mit mehreren Betriebsarten nach Anspruch 4, wobei
die zentrale Stromversorgungseinheit in dem ersten Gerät angeordnet ist, um das erste Gerät mit Strom zu versorgen, über die verdrahteten Kabel mit der entfernten Einrichtung verbunden ist, um die entfernte Einrichtung mit Strom zu versorgen und/oder über die verdrahteten Kabel mit der Basisstations-Außeneinheit oder dem verdrahteten Endgerät verbunden ist, um die Basisstations-Außeneinheit oder das verdrahtete Endgerät mit Strom zu versorgen; und
die Stromreserveeinheit in dem ersten Gerät angeordnet ist, um die Reservestromversorgung für die zentrale Stromversorgungseinheit zu sein.

7. Netzkommunikationssystem mit mehreren Betriebsarten nach Anspruch 3, wobei die lokale Einrichtung und/oder die entfernte Einrichtung ferner eine Konvergenzeinheit umfassen, wobei
die Konvergenzeinheit in der lokalen Einrichtung angeordnet ist, dafür ausgelegt ist, durch die Basisstations-Außeneinheit oder das in der entfernten Einrichtung angeordnete verdrahtete Endgerät empfangene Signale zu der Basisstationszugangs-Verarbeitungseinheit oder der Verarbeitungseinheit für verdrahteten Zugang, die in der lokalen Einrichtung angeordnet ist, zu konvergieren und dann auf diese zuzugreifen und das durch die Basisstationszugangs-Verarbeitungseinheit oder die Verarbeitungseinheit für verdrahteten Zugang, die in der lokalen Einrichtung angeordnet ist, erzeugte Signal zu der Basisstations-Außeneinheit oder dem in der entfernten Einrichtung angeordneten verdrahteten Endgerät zu senden;
oder
die Konvergenzeinheit in der entfernten Einrichtung angeordnet und mit der Basisstationszugangs-Verarbeitungseinheit oder der Verarbeitungseinheit für verdrahteten Zugang, die in der lokalen Einrichtung angeordnet ist, über verdrahtete Kabel fernverbunden ist und mit der Basisstations-Außeneinheit oder dem in der entfernten Einrichtung angeordneten verdrahteten Endgerät fernverbunden ist, dafür ausgelegt ist, durch die Basisstations-Außeneinheit oder das in mehreren entfernten Einrichtungen angeordnete verdrahtete Endgerät empfangene Signale zu der Basisstationszugangs-Verarbeitungseinheit oder der Verarbeitungseinheit für verdrahteten Zugang, die in der lokalen Einrichtung angeordnet ist, zu konvergieren und zu senden und das durch die Basisstationszugangs-Verarbeitungseinheit oder die Verarbeitungseinheit für verdrahteten Zugang, die in der lokalen Einrichtung angeordnet ist, erzeugte Signal zu der Basisstations-Außeneinheit oder dem in der entfernten Einrichtung angeordneten verdrahteten Endgerät zu senden;
oder
die Konvergenzeinheit in der entfernten Einrichtung angeordnet und über verdrahtete Kabel mit der Basisstationszugangs-Verarbeitungseinheit oder der Verarbeitungseinheit für verdrahteten Zugang, die in der entfernten Einrichtung angeordnet ist, verbunden ist und mit der Basisstations-Außeneinheit oder dem in der entfernten Einrichtung angeordneten verdrahteten Endgerät fernverbunden ist, dafür ausgelegt ist, durch die Basisstations-Außeneinheit oder das in mehreren entfernten Einrichtungen angeordnete verdrahtete Endgerät empfangene Signale zu der Basisstationszugangs-Verarbeitungseinheit oder der Verarbeitungseinheit für verdrahteten Zugang, die in der entfernten Einrichtung angeordnet ist, zu konvergieren und dann zu senden und das durch die Basisstationszugangs-Verarbeitungseinheit oder die Verarbeitungseinheit für verdrahteten Zugang, die in der entfernten Einrichtung angeordnet ist, erzeugte Signal zu der Basisstations-Außeneinheit oder dem in der entfernten Einrichtung angeordneten verdrahteten Endgerät zu senden.

8. Netzkommunikationssystem mit mehreren Betriebsarten nach Anspruch 3, wobei
wenn das zweite Gerät drahtloses Gerät ist,
die Basisstationszugangs-Verarbeitungseinheit Folgendes umfasst: ein Verarbeitungsmodul der Upper Link Layer drahtloser Daten und mindestens eine der folgenden Alternativen: ein Verarbeitungsmodul der Link Layer drahtloser Daten, ein Basisband-Verarbeitungsmodul, ein Zwischenfrequenz- Verarbeitungsmodul und ein Hochfrequenz-Nachverarbeitungsmodul; und
die Basisstations-Außeneinheit Folgendes umfasst; eine Antenne und ein Hochfrequenz-Vorverarbeitungsmodul und mindestens eine der folgenden Alternativen: das Hochfrequenz-Nachverarbeitungsmodul, das Zwischenfrequenz-Verarbeitungsmodul, das Basisband-Verarbeitungsmodul und das Verarbeitungsmodul der Link Layer drahtloser Daten.

9. Netzkommunikationssystem mit mehreren Betriebsarten nach Anspruch 3, wobei, falls das zweite Gerät verdrahtetes Gerät ist,
das verdrahtete Endgerät ein Integrated Access Equipment IAD mit entfernter Stromversorgung ist und die Verarbeitungseinheit für verdrahteten Zugang ein Ethernet-Switch-Modul ist;
oder
das verdrahtete Endgerät ein Ethernet-Switch mit entfernter Stromversorgung ist und die Verarbeitungseinheit für verdrahteten Zugang ein Routermodul ist;
oder
das verdrahtete Endgerät eine Optical Network Unit ONU mit entfernter Stromversorgung ist und die Verarbeitungseinheit für verdrahteten Zugang ein Optical Line Terminal OLT ist;
oder
das verdrahtete Endgerät ein Schrank des Digital Subscriber Line Access Multiplexer DSLAM mit entfernter Stromversorgung ist und die Verarbeitungseinheit für verdrahteten Zugang ein DSLAM-Zugangsverarbeitungsmodul ist.

10. Netzkommunikationssystem mit mehreren Betriebsarten nach Anspruch 3, wobei, falls mehrere Basisstationszugangs-Verarbeitungseinheiten oder Verarbeitungseinheiten für verdrahteten Zugang vorliegen, jede der Basisstationszugangs-Verarbeitungseinheiten oder Verarbeitungseinheiten für verdrahteten Zugang über eine Switch-Konvergenzeinheit mit der Basisstations-Außeneinheit oder dem verdrahteten Endgerät kommuniziert; und die Basisstationszugangs-Verarbeitungseinheit oder die Verarbeitungseinheit für verdrahteten Zugang auf der Basis der Switch-Konvergenzeinheit Reserve füreinander bereitstellen.

11. Netzkommunikationssystem mit mehreren Betriebsarten nach Anspruch 10, wobei
die Switch-Konvergenzeinheit in der lokalen Einrichtung oder der entfernten Einrichtung angeordnet ist, dafür ausgelegt ist, durch die Basisstations-Außeneinheit oder das in der entfernten Einrichtung angeordnete verdrahtete Endgerät empfangene Signale zu einer Basisstationszugangs-Verarbeitungseinheit oder einer Verarbeitungseinheit für verdrahteten Zugang, die in der lokalen Einrichtung oder der entfernten Einrichtung angeordnet ist, zu konvergieren und dann selektiv auf diese zuzugreifen und das durch die Basisstationszugangs-Verarbeitungseinheit oder die Verarbeitungseinheit für verdrahteten Zugang, die in der lokalen Einrichtung oder der entfernten Einrichtung angeordnet ist, erzeugte Signal zu der Basisstations-Außeneinheit oder dem in der entfernten Einrichtung angeordneten verdrahteten Endgerät zu senden;
oder
zwei Switch-Konvergenzeinheiten jeweils in der lokalen Einrichtung und in der entfernten Einrichtung angeordnet sind, eine in der lokalen Einrichtung angeordnete erste Switch-Konvergenzeinheit mit einer in der entfernten Einrichtung angeordneten zweiten Switch-Konvergenzeinheit fernverbunden ist und die zweite Switch-Konvergenzeinheit auch mit der Basisstations-Außeneinheit oder dem verdrahteten Endgerät fernverbunden ist, wobei die zweite Switch-Konvergenzeinheit dafür ausgelegt ist, durch die mehreren Basisstations-Außeneinheiten oder in den entfernten Einrichtungen angeordneten verdrahteten Endgeräte empfangene Signale
zu der ersten Switch-Konvergenzeinheit zu senden, die selektiv auf die Signale zu einer der Basisstations-Außeneinheiten oder in der lokalen Einrichtung angeordneten Verarbeitungseinheiten für verdrahteten Zugang zugreift; die erste Switch-Konvergenzeinheit dafür ausgelegt ist, durch jede der Basisstationszugangs-Verarbeitungseinheit oder in der lokalen Einrichtung angeordneten Verarbeitungseinheit für verdrahteten Zugang erzeugte Signale zu der zweiten Switch-Konvergenzeinheit zu senden, die selektiv auf die Signale zu der einen bzw. dem einen der Basisstations-Außeneinheiten oder in der entfernten Einrichtung angeordneten verdrahteten Endgeräte zugreift.

12. Netzkommunikationssystem mit mehreren Betriebsarten nach Anspruch 3, wobei
falls das zweite Gerät drahtloses Gerät ist, die mehreren Basisstations-Außeneinheiten zu Folgendem konfiguriert sind:
mindestens eine Mehrantennen-Sendediversität oder Mehrantennen-Empfangsdiversität, falls mehrere Basisstations-Außeneinheiten vorliegen.

13. Netzkommunikationssystem mit mehreren Betriebsarten nach Anspruch 1 bis 2, wobei die entfernten Einrichtungen in einer Stern-, Ring- oder Netzstruktur miteinander verbunden sind, falls mehrere entfernte Einrichtungen vorliegen.

14. Kommunikationssystem mit mehreren Betriebsarten nach Anspruch 13, wobei die entfernten Stromversorgungseinheiten über einen Stern-, Ring- oder gemeinsam benutzten Bus miteinander verbunden sind, falls die entfernten Einrichtungen jeweils die entfernte Stromversorgungseinheit umfassen.

15. Netzkommunikationssystem mit mehreren Betriebsarten nach Anspruch 14, wobei die entfernten Stromversorgungseinheiten dafür ausgelegt sind, Reserveverbindungen füreinander bereitzustellen, und falls irgendeine bzw. irgendeines der Basisstations-Außeneinheiten oder verdrahteten Endgeräte ausfällt, die Basisstations-Außeneinheit oder das verdrahtete Endgerät durch eine verfügbare entfernte Stromversorgungseinheit mit Strom versorgt wird, nachdem ein Stromversorgungsumwechseln von der ausgefallenen entfernten Stromversorgungseinheit zu einer verfügbaren entfernten Stromversorgungseinheit abgeschlossen ist.

16. Netzkommunikationssystem mit mehreren Betriebsarten nach Anspruch 1 oder 2, wobei das erste Gerät verdrahtetes Gerät oder drahtloses Gerät ist.

17. Netzkommunikationssystem mit mehreren Betriebsarten nach Anspruch 16, wobei
falls sowohl das erste Gerät als auch das zweite Gerät verdrahtetes Gerät sind, das erste Gerät und das zweite Gerät ein verdrahtetes Netzkommunikationssystem mit mehreren Betriebsarten bilden;
falls das erste Gerät verdrahtetes Gerät und das zweite Gerät drahtloses Gerät ist oder das erste Gerät drahtloses Gerät und das zweite Gerät verdrahtetes Gerät ist, das erste Gerät und das zweite Gerät ein verdrahtetes und drahtloses Netzkommunikationssystem mit mehreren Betriebsarten bilden; und
falls sowohl das erste Gerät als auch das zweite Gerät drahtloses Gerät sind, das erste Gerät und das zweite Gerät ein drahtloses Netzkommunikationssystem mit mehreren Betriebsarten bilden.

## Revendications

1. Système de communication sur réseau multimode, comprenant un premier équipement fondé sur un premier mode et un second équipement fondé sur un second mode, **caractérisé en ce que** : le second équipement comprend un dispositif local et au moins deux dispositifs à distance qui sont interconnectés avec des câbles, le dispositif local étant disposé dans le premier équipement et les dispositifs à distance étant indépendants du premier équipement.

2. Système de communication sur réseau multimode selon la revendication 1, dans lequel l'un des au moins deux dispositifs à distance est relié à distance avec le dispositif local par l'intermédiaire de câbles.

3. Système de communication sur réseau multimode selon la revendication 1 ou 2, dans lequel :
dans le cas où le second équipement est un équipement sans fil, le dispositif local comprend une unité d'alimentation et une unité de traitement d'accès à une station de base, et les dispositifs à distance comprennent une unité extérieure de station de base ; ou bien le dispositif local comprend l'unité d'alimentation et les dispositifs à distance comprennent une unité extérieure de station de base et une unité de traitement d'accès à une station de base, et
dans le cas où le second équipement est un équipement câblé, le dispositif local comprend une unité d'alimentation et une unité de traitement d'accès câblé et les dispositifs à distance comprennent un terminal câblé ; ou bien le dispositif local comprend une unité d'alimentation et les dispositifs à distance comprennent un terminal câblé et une unité de traitement d'accès câblé.

4. Système de communication sur réseau multimode selon la revendication 3, dans lequel l'unité d'alimentation comprend une unité centrale d'alimentation et une unité de sauvegarde d'alimentation.

5. Système de communication sur réseau multimode selon la revendication 3, dans lequel le dispositif à distance comprend en outre une unité d'alimentation à distance, et
l'unité d'alimentation à distance est reliée à l'unité d'alimentation agencée dans le dispositif local par l'intermédiaire des câbles, et elle récupère de l'énergie électrique pour fournir de l'énergie au dispositif à distance,
ou,
l'unité d'alimentation à distance récupère de l'énergie électrique locale, et elle est reliée à l'unité extérieure de station de base ou au terminal câblé agencé dans le dispositif à distance par l'intermédiaire des câbles, afin de fournir de l'énergie à l'unité extérieure de station de base ou au terminal câblé,
ou,
l'unité d'alimentation à distance est reliée à l'unité d'alimentation à distance d'un dispositif à distance de niveau suivant par l'intermédiaire des câbles, afin de fournir de l'énergie au dispositif à distance de niveau suivant.

6. Système de communication sur réseau multimode selon la revendication 4, dans lequel
l'unité centrale d'alimentation est disposée dans le premier équipement pour fournir de l'énergie au premier équipement, reliée au dispositif à distance par l'intermédiaire des câbles pour fournir de l'énergie au dispositif à distance et/ou relié à l'unité extérieure de station de base ou au terminal câblé par l'intermédiaire des câbles pour fournir de l'énergie à l'unité extérieure de station de base ou au terminal câblé,
l'unité de sauvegarde d'alimentation est disposée dans le premier équipement pour être la sauvegarde d'alimentation de l'unité centrale d'alimentation.

7. Système de communication sur réseau multimode selon la revendication 3, dans lequel le dispositif local et/ou le dispositif à distance comprennent en outre une unité de convergence, dans lequel
l'unité de convergence est agencée dans le dispositif local, conçue pour faire converger puis accéder à des signaux reçus par l'unité extérieure de station de base ou par le terminal câblé agencé dans le dispositif à distance vers l'unité de traitement d'accès à une station de base ou vers l'unité de traitement d'accès câblé agencée dans le dispositif local, et pour envoyer un signal généré par l'unité de traitement d'accès à une station de base ou par l'unité de traitement d'accès câblé agencée dans le dispositif local vers l'unité extérieure de station de base ou vers le terminal câblé agencé dans le dispositif à distance,
ou,
l'unité de convergence est agencée dans le dispositif à distance et reliée à distance à l'unité de traitement d'accès à une station de base ou à l'unité de traitement d'accès câblé agencée dans le dispositif local par l'intermédiaire de câbles, et reliée à distance à l'unité extérieure de station de base ou au terminal câblé agencé dans le dispositif à distance, conçue pour faire converger et transmettre des signaux reçus par l'unité extérieure de station de base ou par le terminal câblé agencé dans de multiples dispositifs à distance vers l'unité de traitement d'accès à une station de base ou vers l'unité de traitement d'accès câblé agencée dans le dispositif local, et pour envoyer un signal généré par l'unité de traitement d'accès à une station de base ou par l'unité de traitement d'accès câblé agencée dans le dispositif local vers l'unité extérieure de station de base ou vers le terminal câblé agencé dans le dispositif à distance,
ou,
l'unité de convergence est agencée dans le dispositif à distance et reliée à l'unité de traitement d'accès à une station de base ou à l'unité de traitement d'accès câblé agencée dans le dispositif à distance par l'intermédiaire de câbles, et reliée à distance à l'unité extérieure de station de base ou au terminal câblé agencé dans le dispositif à distance, conçue pour faire converger puis pour transmettre des signaux reçus par l'unité extérieure de station de base ou par le terminal câblé agencé dans de multiples dispositifs à distance vers l'unité de traitement d'accès à une station de base ou vers l'unité de traitement d'accès câblé agencée dans le dispositif à distance, et pour envoyer un signal généré par l'unité de traitement d'accès à une station de base ou par l'unité de traitement d'accès câblé agencée dans le dispositif à distance vers l'unité extérieure de station de base ou vers le terminal câblé agencé dans le dispositif à distance.

8. Système de communication sur réseau multimode selon la revendication 3, dans lequel,
si le second équipement est un équipement sans fil;
l'unité de traitement d'accès à une station de base comprend : un module de traitement de couche de liaison supérieure de données sans fil et au moins l'un d'un module de traitement de couche de liaison de données sans fil, d'un module de traitement en bande de base, d'un module de traitement en fréquence intermédiaire et d'un module de post-traitement en haute fréquence, et
l'unité extérieure de station de base comprend : une antenne et un module de prétraitement en haute fréquence, et au moins l'un du module de post-traitement en haute fréquence, du module de traitement en fréquence intermédiaire, du module de traitement en bande de base et du module de traitement de couche de liaison de données sans fil.

9. Système de communication sur réseau multimode selon la revendication 3, dans lequel dans le cas où le second équipement est un équipement câblé,
le terminal câblé est un équipement à accès intégré, IAD, comportant une alimentation à distance, et l'unité de traitement d'accès câblé est un module de commutation Ethernet,
ou,
le terminal câblé est un commutateur Ethernet comportant une alimentation à distance et l'unité de traitement d'accès câblé est un module d'acheminement,
ou,
le terminal câblé est une unité de réseau optique, ONU, comportant une alimentation à distance et l'unité de traitement d'accès câblé est un terminal de ligne optique, OLT,
ou,
le terminal câblé est une armoire de multiplexeur d'accès aux lignes numériques d'abonnés, DSLAM, comportant une alimentation à distance, et l'unité de traitement d'accès câblé est un module de traitement d'accès au multiplexeur DSLAM.

10. Système de communication sur réseau multimode selon la revendication 3, dans lequel, dans le cas où il existe des unités multiples de traitement d'accès à une station de base ou des unités multiples de traitement d'accès câblé, chacune des unités de traitement d'accès à une station de base ou des unités de traitement d'accès câblé communique, par l'intermédiaire d'une unité de convergence de commutation, avec l'unité extérieure de station de base ou avec le terminal câblé, et l'unité de traitement d'accès à une station de base ou l'unité de traitement d'accès câblé constituent l'une pour l'autre une sauvegarde sur la base de l'unité de convergence de commutation.

11. Système de communication sur réseau multimode selon la revendication 10, dans lequel :
l'unité de convergence de commutation est agencée dans le dispositif local ou dans le dispositif à distance, conçue pour faire converger puis pour accéder sélectivement à des signaux reçus par l'unité extérieure de station de base ou par le terminal câblé agencé dans le dispositif à distance vers une unité de traitement d'accès à une station de base ou une unité de traitement d'accès câblé agencée dans le dispositif local ou le dispositif à distance, et pour envoyer un signal généré par l'unité de traitement d'accès à une station de base ou par l'unité de traitement d'accès câblé située dans le dispositif local ou dans le dispositif à distance vers l'unité extérieure de station de base ou vers le terminal câblé agencé dans le dispositif à distance,
ou,
deux unités de convergence de commutation sont agencées respectivement dans le dispositif local et dans le dispositif à distance, une première unité de convergence de commutation, agencée dans le dispositif local, est connectée à distance avec une seconde unité de convergence de commutation, agencée dans le dispositif à distance, et la seconde unité de convergence de commutation est également connectée à distance avec l'unité extérieure de station de base ou avec le terminal câblé, la seconde unité de convergence de commutation étant conçue pour envoyer des signaux reçus par les multiples unités extérieures de station de base ou par les multiples terminaux câblés agencés dans les dispositifs à distance vers la première unité de convergence de commutation qui accède sélectivement aux signaux vers l'une des unités extérieures de station de base ou vers l'une des unités de traitement d'accès câblé agencées dans le dispositif local, la première unité de convergence de commutation étant conçue pour envoyer des signaux générés par chacune de l'unité de traitement d'accès à une station de base ou de l'unité de traitement d'accès câblé agencée dans le dispositif local vers la seconde unité de convergence de commutation qui accède sélectivement aux signaux vers ladite unité des unités extérieures de station de base ou ledit terminal des terminaux câblés agencés dans le dispositif à distance.

12. Système de communication sur réseau multimode selon la revendication 3, dans lequel,
dans le cas où le second équipement est un équipement sans fil, les multiples unités extérieures de station de base sont configurées
en au moins une diversité d'émission à antennes multiples ou une diversité de réception à antennes multiples dans le cas où il existe de multiples unités extérieures de station de base.

13. Système de communication sur réseau multimode selon les revendications 1 et 2, dans lequel les dispositifs à distance sont interconnectés les uns avec les autres en structure d'étoile, d'anneau ou de réseau dans le cas où il existe de multiples dispositifs à distance.

14. Système de communication sur réseau multimode selon la revendication 13, dans lequel les unités d'alimentation à distance sont reliées les unes aux autres en étoile, en anneau ou en bus partagé dans le cas où les dispositifs à distance comprennent chacun l'unité d'alimentation à distance.

15. Système de communication sur réseau multimode selon la revendication 14, dans lequel les unités d'alimentation à distance sont conçues pour fournir les unes aux autres des connexions de sauvegarde et, dans le cas où l'un(e) quelconque des unités extérieures de station de base ou des terminaux câblés est défaillant, l'unité extérieure de station de base ou le terminal câblé est alimenté en énergie par une unité d'alimentation à distance disponible après la réalisation d'un basculement de puissance depuis une unité d'alimentation à distance défaillante vers l'unité d'alimentation à distance disponible.

16. Système de communication sur réseau multimode selon la revendication 1 ou 2, dans lequel le premier équipement est un équipement câblé ou un équipement sans fil.

17. Système de communication sur réseau multimode selon la revendication 16, dans lequel :
dans le cas où à la fois le premier équipement et le second équipement sont des équipements câblés, le premier équipement et le second équipement constituent un système de communication sur réseau câblé multimode,
dans le cas où le premier équipement est un équipement câblé et où le second équipement est un équipement sans fil, ou bien où le premier équipement est un équipement sans fil et le second équipement est un équipement câblé, le premier équipement et le second équipement constituent un système de communication de réseau câblé et sans fil multimode, et
dans le cas où à la fois le premier équipement et le second équipement sont des équipements sans fil, le premier équipement et le second équipement constituent un système de communication de réseau sans fil multimode.
